# EUROPEAN PATENT SPECIFICATION

(11) **EP 4 104 520 B1**
(45) Date of publication and mention of the grant of the patent: **17.07.2024**
(21) Application number: 21705158.0
(22) Date of filing: 11.02.2021
(51) Int. Cl.: H04W 48/18, H04W 76/10, H04W 36/00

(54) **RE-SELECTION OF A PGW-C/SMF IN THE DESIRED NETWORK SLICE**
PGW-C/SMF NEUAUSWAHL IN DER GEWÜNSCHTEN NETZWERKSCHEIBE
RESÉLECTION D'UNE PGW-C/SMF DANS LA TRANCHE DE RÉSEAU SOUHAITÉ

(30) Priority: 13.02.2020 US 202062976157 P
(43) Date of publication of application: 21.12.2022
(73) Proprietor: Telefonaktiebolaget LM Ericsson (publ), 164 83 Stockholm (SE)
(72) Inventor: YANG, Yong, 428 36 Kållered (SE); OLSSON, Tony, 474 96 Nösund (SE)
(74) Representative: Ericsson
(86) International application number: PCT/EP2021/053283
(87) International publication number: WO 2021/160715

(56) References cited:
- ERICSSON: "EPS to 5GS with network slices", vol. SA WG2, no. West Palm Beach, USA; 20181126 - 20181130, 20 November 2018 (2018-11-20), XP051498670, Retrieved from the Internet <URL:http://www.3gpp.org/ftp/tsg%5Fsa/WG2%5FArch/TSGS2%5F129BIS%5FWest%5FPalm%5FBeach/Docs/S2%2D1811924%2Ezip> [retrieved on 20181120]
- ERICSSON: "EPS to 5GS with network slices", vol. SA WG2, no. West Palm Beach, USA; 20181126 - 20181130, 20 November 2018 (2018-11-20), XP051498669, Retrieved from the Internet <URL:http://www.3gpp.org/ftp/tsg%5Fsa/WG2%5FArch/TSGS2%5F129BIS%5FWest%5FPalm%5FBeach/Docs/S2%2D1811923%2Ezip> [retrieved on 20181120]
- "3rd Generation Partnership Project; Technical Specification Group Services and System Aspects; Procedures for the 5G System (5GS); Stage 2 (Release 16)", vol. SA WG2, no. V16.3.0, 22 December 2019 (2019-12-22), pages 1 - 558, XP051840932, Retrieved from the Internet <URL:ftp://ftp.3gpp.org/Specs/archive/23_series/23.502/23502-g30.zip 23502-g30.docx> [retrieved on 20191222]
- CATT: "Solution for Connected mode mobility from EPC to 5GC", vol. SA WG2, no. Vilnius, Lithuania; 20180702 - 20180706, 6 July 2018 (2018-07-06), XP051538602, Retrieved from the Internet <URL:http://www.3gpp.org/ftp/tsg%5Fsa/WG2%5FArch/TSGS2%5F128%5FVilnius/Docs/S2%2D187180%2Ezip> [retrieved on 20180706]

## Description

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Interworking between the Evolved Packet Core (EPC) of 4G and the 5G Core (5GC) requires the selection of a Session Management Function (SMF)/Packet Data Network Gateway-Control Plane (PGW-C) (which may be implemented as a combined SMF/PGW-C network function) together with a User Plane Function (UPF)/Packet Data Network Gateway-User Plane (PGW-U) (which may be implemented as a combined UPF/PGW-U network function). This is vital to maintain session continuity when the User Equipment (UE) moves between a 4G radio access network and a 5G radio access network (see, e.g., 3rd Generation Partnership Project (3GPP) Technical Specification (TS) 23.501 ch. 5.17.2; TS 23.502 ch. 4.11; TS 29.303 ch. 5.12.3). 3rd Generation Partnership Project; Technical Specification Group Services and System Aspects; Procedures for the 5G System (5GS); Stage 2 (Release 16)",vol. SA WG2, no. V16.3.0 22 December 2019 (2019-12-22), pages 1-558, defines procedures to support interworking between 5GS and EPS.

### Figure 1

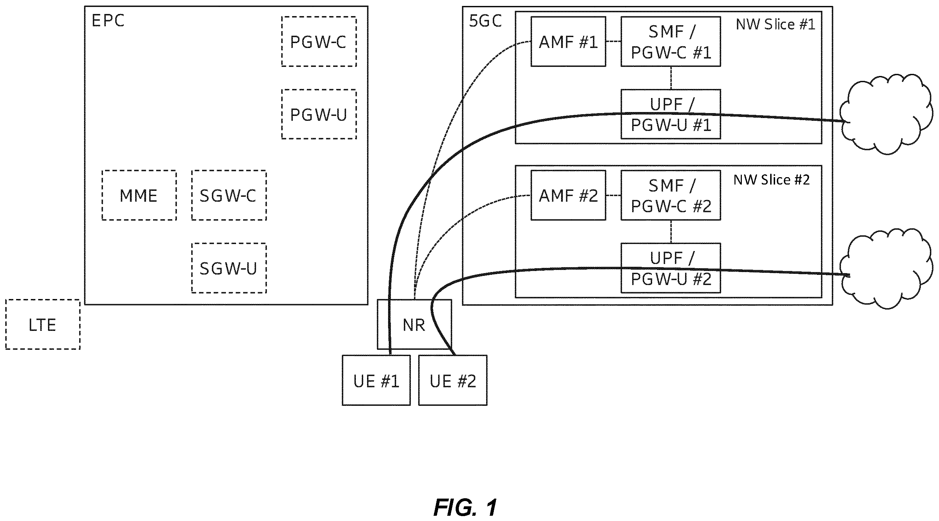

A UE may attempt to access services available over a 5GC radio access via 5G radio access (i.e., over a 5G/NR radio access network (RAN)), or by accessing the 5GC through a 4G radio access (i.e., via a 4G/LTE RAN). **Figure 1** illustrates a first situation in which UEs are accessing respective network slices of a 5GC via a 5G NR RAN. Here, UE #1 is connected through a NR RAN to NW slice #1 of the 5GC. AMF #1 and SMF/PGW-C #1 control access to the NW slice #1 for UE #1. The UPF/PGW-U provides the user plane path to the data network DN#1. Similarly, UE #2 accesses NW slice #2 of the 5GC over the NR RAN under the control of AMF #2 and SMF/PGW-C #2, and the user plane path to DN#2 is through the UPF/PGW-U#2.

### Figure 2

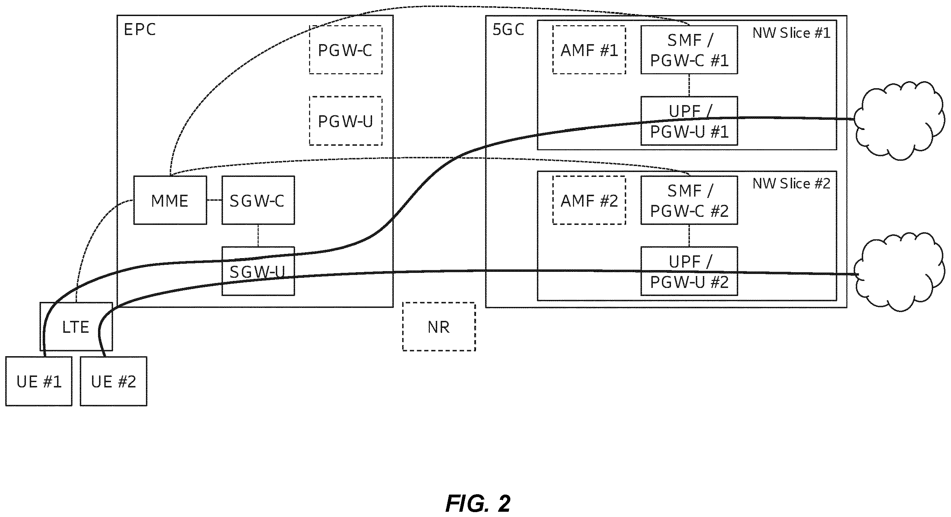

An alternative situation is illustrated in **Figure 2****,** in which UE #1 and UE #2 may only have access to NW Slice #1 and NW Slice #2 through a 4G/LTE RAN. As shown, the MME in the EPC communicates with SMF/PGW-C of the appropriate network slice each UE is accessing in the 5G network. Thus, the MME cooperates with the 5G network to manage access to the respective 5G network slices. The user plane path in the EPC is through the SGW-U.

To initiate UE access to a network slice of the 5GC via 4G radio access, as illustrated in Figure 2, a Mobility Management Entity (MME) selects an SMF/PGW-C, for example, by means of Domain Name System (DNS) procedures (TS 23.401 ch. 4.3.8.1; TS 29.303 ch. 5.12.3), and the selected SMF/PGW-C selects a UPF/PGW-U (TS 23.214 ch. 4.3.3; 5.12; TS 23.501 ch. 6.3.3).

The following tables shows some key parameters for a combined SMF/PGW-C in its Network Function (NF) profile stored in the NF Repository Function (NRF), where the SMF is configured to support an array of network slices (Network Slice Selection Assistance Information (NSSAI)), and each network slice is configured with a number of supported Data Network Names (i.e. Access Point Names (APNs) for 4G/3G/2G network). Note that the NSSAI is a collection of S-NSSAls. An S-NSSAI identifies a network slice.

**Table 6.1.6.2.12-1: Definition of type SmfInfo**

| *Attribute name* | | *Data type* | *P* | *Cardinality* | *Description* |
|---|---|---|---|---|---|
| ***sNssaiSmflnfoList*** | | ***array(sNssaiSmf InfoItem)*** | ***M*** | ***1..N*** | ***List of parameters supported by the SMF per S-NSSAI (NOTE 1).*** |
| *taiList* | | *array(Tai)* | *O* | *1..N* | *The list of TAIs the SMF can serve. It may contain the non-3GPP access TAI. The absence of this attribute and the taiRangeList attribute indicate that the SMF can be selected for any TAI in the serving network.* |
| *taiRangeList* | | *array(TaiRange)* | *O* | *1..N* | *The range of TAIs the SMF can serve. It may contain the non-3GPP access' TAI. The absence of this attribute and the taiList attribute indicate that the SMF can be selected for any TAI in the serving network.* |
| *pgwFqdn* | | *Fqdn* | *O* | *0..1* | *The FQDN of the PGW if the SMF is a combined SMF*/*PGW-C.* |
| *access Type* | | *array(AccessTyp e)* | *C* | *1..2* | *If included, this IE shall contain the access type (3GPP_ACCESS and*/*or NON_3GPP_ACCESS*) *supported by the SMF.* |
| | | | | | *If not included, it shall be assumed the both access types are supported.* |
| *priority* | | *integer* | *O* | *0..1* | *Priority (relative to other NFs of the same type) in the range of 0-65535, to be used for NF selection for a service request matching the attributes of the SmfInfo; lower values indicate a higher priority. See the precedence rules in the description of the priority attribute in NFProfile, if Priority is also present in the nfServiceList parameters or in NFProfile.* |
| | | | | | *The NRF may overwrite the received priority value when exposing an NFProfile with the Nnrf_NFDiscovery service. (NOTE 2)* |
| *NOTE 1:* | *If this S-NSSAIs is present in the SmfInfo and in the NFprofile, the S-NSSAIs from the SmfInfo shall prevail.* | | | | |
| *NOTE 2:* | *An SMF profile may e.g. contain multiple SmfInfo entries, with each entry containing a different list of TAIs and a different priority, to differentiate the priority to select the SMF based on the user location. The priority in SmfInfo has the least precedence, i.e. it applies between SMFs or SMF Services with the same priority.* | | | | |

**Table 6.1.6.2.29-1: Definition of type SnssaiSmflnfoltem**

| *Attribute name* | *Data type* | *P* | *Cardinality* | *Description* |
|---|---|---|---|---|
| *sNssai* | *Snssai* | *M* | *1* | *Supported S-NSSAI* |
| ***dnnSmflnfoList*** | ***array(DnnSmflnf oltem)*** | ***M*** | ***1..N*** | ***List of parameters supported by the SMF per DNN*** |

During an Evolved Packet System (EPS) to 5G System (5GS) mobility procedure (i.e., EPC to 5GC), the PGW Node Name is transferred from the Source MME to the target AMF when an N26 interface is available, or the target AMF receives the PGW Node Name from the Unified Data Management (UDM)/Home Subscriber Server (HSS) when an N26 interface is not available.

As an example, in TS 23.502, 4.11.1.2.2, step 4 (for the case in which N26 is available):
4. The initial AMF invokes the Nsmf_PDUSession_CreateSMContext service operation (UE EPS PDN Connection, initial AMF ID, data Forwarding information, Target ID) **on the SMF identified by the PGW-C+SMF address** and indicates handover (HO) preparation indication (to avoid switching the UP path).

As another example, in TS 23.502, 4.11.2.3 EPS to 5GS Mobility, step 9:
The AMF determines the S5/S8 interface of the PGW-C+SMF for the PDU Session based on the DNN received from the UE and **the PGW-C+SMF ID in the subscription profile received from the HSS+UDM in step 5, or when the HSS+UDM notifies the AMF for the new PGW-C+SMF ID in the updated subscription profile.** The AMF queries the NRF in the serving PLMN by issuing the Nnrf_NFDiscovery_Request including the FQDN for the S5/S8 interface of the PGW-C+SMF, and the NRF provides the IP address or FQDN of the N11/N16 interface of the PGW-C+SMF. The AMF invokes the Nsmf_PDUSession_CreateSMContext service with the SMF address provided by the NRF. The AMF includes the PDU Session ID to the request sent to the PGW-C+SMF.

This is also reflected in stage 3 specification e.g. in TS 29.274, the **Forward Relocation Request** message is used for connected mode mobility procedure.

**Table 7.3.1-2: MME/SGSN/AMF UE EPS PDN Connections within Forward Relocation Request**

| *Octet 1* | *PDN Connection IE Type* = *109 (decimal)* | | | |
|---|---|---|---|---|
| *Octets 2 and 3* | *Length* = *n* | | | |
| *Octet 4* | *Spare and Instance fields* | | | |
| *Information elements* | *P* | *Condition* / *Comment* | *IE Type* | *Ins.* |
| *APN* | *M* | | *APN* | *0* |
| *APN Restriction* | *C* | *This IE denotes the restriction on the combination of types of APN for the APN associated with this EPS bearer Context. The target MME or SGSN determines the Maximum APN Restriction using the APN Restriction. If available, the source MME*/*S4SGSN shall include this IE.* | *APN Restriction* | *0* |
| *Selection Mode* | *CO* | *When available, this IE shall be included by the source MME*/*S4-SGSN*/*AMF.* | *Selection Mode* | *0* |
| *IPv4 Address* | *C* | *This IE shall not be included if no IPv4 Address is assigned. See NOTE 1.* | *IP Address* | *0* |
| *IPv6 Address* | *C* | *This IE shall not be included if no IPv6 Address is assigned.* | *IP Address* | *1* |
| *Linked EPS Bearer ID* | *M* | *This IE identifies the default bearer of the PDN Connection.* | *EBI* | *0* |
| *PGW S5*/*S8 IP Address for Control Plane or PMIP* | *M* | *This IE shall include the TEID in the GTP based S5*/*S8 case and the uplink GRE key in the PMIP based S5*/*S8 case.* | *F-TEID* | *0* |
| | | *See NOTE 4.* | | |
| *PGW node name* | *C* | *This IE shall be included if the source MME, SGSN or AMF has the PGW FQDN.* | *FQDN* | *0* |
| | *CO* | ***This IE shall be included by the source MME over the N26 interface. See NOTE 6.*** | | |

| | | | | |
|---|---|---|---|---|
| **NOTE 6: The PGW Node Name is used by the target AMF in the NF Service Discovery procedure to find the combined PGW-C/SMF for the PDU Session during an MME to AMF mobility procedure.** | | | | |

And the Context Response message is used for Idle mode mobility procedure.

**Table 7.3.6-2: MME/SGSN/AMF UE EPS PDN Connections within Context Response**

| *Octet 1* | *PDN Connection IE Type* = *109 (decimal)* | | | |
|---|---|---|---|---|
| *Octets* 2 *and 3* | *Length* = *n* | | | |
| *Octet 4* | *Spare and Instance fields* | | | |
| *Information elements* | *P* | *Condition* / *Comment* | *IE Type* | *Ins.* |
| *APN* | *M* | | *APN* | *0* |
| *APN Restriction* | *C* | *This IE denotes the restriction on the combination of types of APN for the APN associated with this EPS bearer Context. The target MME or SGSN determines the Maximum APN Restriction using the APN Restriction. If available, the source MME*/*S4 SGSN shall include this IE.* | *APN Restriction* | *0* |
| *Selection Mode* | *CO* | *When available, this IE shall be included by the source MME*/*S4-SGSN*/*AMF.* | *Selection Mode* | *0* |
| *IPv4 Address* | *C* | *This IE shall not be included if no IPv4 Address is assigned. See NOTE 1. See NOTE 5.* | *IP Address* | *0* |
| *IPv6 Address* | *C* | *This IE shall not be included if no IPv6 Address is assigned. See NOTE 5.* | *IP Address* | *1* |
| *Linked EPS Bearer ID* | *M* | *This IE identifies the default bearer of the PDN Connection.* | *EBI* | *0* |
| *PGW S5*/*S8 IP Address for Control Plane or PMIP* | *M* | *This IE shall include the TEID in the GTP based S5*/*S8 case and the uplink GRE key in the PMIP based S5*/*S8 case. See NOTE 3.* | *F-TEID* | *0* |
| *PGW node name* | *C* | *This IE shall be included if the source MME, SGSN or AMF has the PGW FQDN.* | *FQDN* | *0* |
| | *CO* | *This IE shall be included by the source MME over the N26 interface. See NOTE 6.* | | |

| | | | | |
|---|---|---|---|---|
| NOTE 6: The PGW Node Name is used by the target AMF in the NF Service Discovery procedure to find the combined PGW-C/SMF for the PDU Session during an MME to AMF mobility procedure | | | | |

### SUMMARY

The invention is defined by the independent claim.

There currently exist certain challenge(s). In general, the MME does not have sufficient information (i.e. no network slice information, which is part of 5G subscription information) to select an SMF/PGW-C supporting the correct network slice.

The key parameter used by the MME to select a PGW is the Access Point Name (APN), which may be used across a number of network slices, i.e. multiple network slices may support access to the same Data network (identified by the APN). However, the PGW may be configured to support only a subset of network slices for a given APN, and the UE may have a subscription only allowing access to specific network slices for that APN. in other words, the APN may be used across a number of network slices, where only some of those network slices may be supported by the selected PGW, and the UE may have a subscription to a network slice that is not supported by the selected PGW.

in short, the PGW selected by the MME may not be able to accept a request for creation of a session for the PDN connection if the PGW is not configured to support the network slice that the UE subscription allows among the network slices for the requested APN.

The standard does not specify any requirement when the above scenario takes place. One approach is certainly to reject the request, however such rejection results in a very bad Key Performance Indicator (KPI) and, when the UE tries again to establish the PDN connection, the request may be rejected again.

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. In the drawings:
- **Figure 1**: illustrates a first situation in which UEs are accessing respective network slices of a 5GC via a 5G NR RAN;
- **Figure 2**: illustrates an alternative situation in which UE #1 and UE #2 may only have access to NW Slice #1 and NW Slice #2 through a 4G/LTE RAN;
- **Figure 3**: illustrates an example alternative wherein a SMF/PGW-C redirects a Create Session Request message;
- **Figure 4**: illustrates an example alternative wherein an alternative SMF/PGW-C #2 is provided in a Create Session Response message;
- **Figure 5**: illustrates a schematic example alternative wherein a SMF/PGW-C #1 redirects a Create Session Request to a SMF/PGW-C #1;
- **Figure 6**: illustrates one example of a cellular communications system in which embodiments of the present disclosure may be implemented;
- **Figure 7**: is a schematic block diagram of a core network node according to some embodiments of the present disclosure;
- **Figure 8**: is schematic block diagram that illustrates a virtualized embodiment of the core network node according to some embodiments of the present disclosure;
- **Figure 9**: is a schematic block diagram of the core network node according to some other embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may also be found in the document(s) provided in the Appendix.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a UPF, a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

### Figure 6

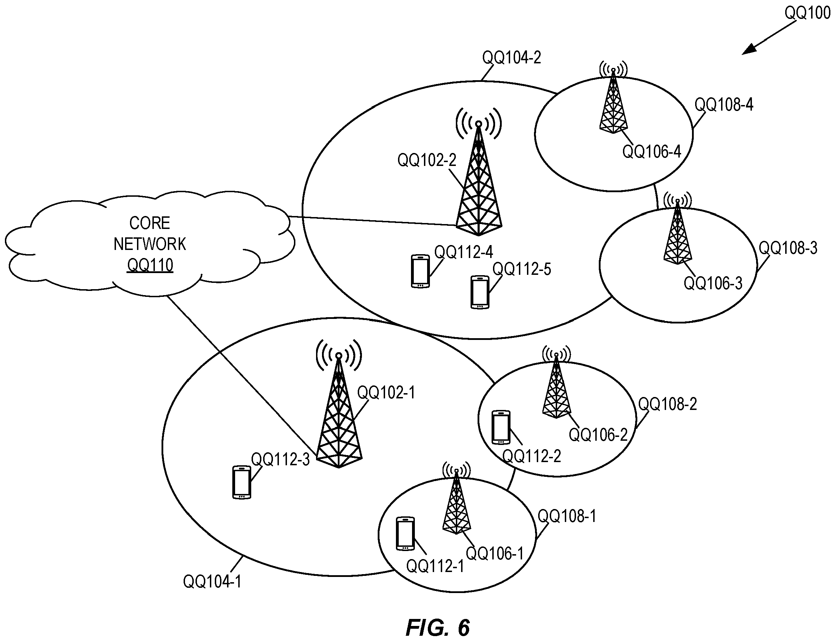

**Figure 6** illustrates one example of a cellular communications system QQ100 in which embodiments of the present disclosure may be implemented. In the embodiments described herein, the cellular communications system QQ100 is a combination of a 5G system (5GS) including a NR RAN and a 5GC and a 4G system (i.e. an EPS) including an LTE RAN and an EPC. In this example, the RAN includes base stations QQ102-1 and QQ102-2, which in LTE are referred to as eNBs (when connected to EPC) and in 5G NR are referred to as gNBs (e.g., LTE RAN nodes connected to 5GC, which are referred to as ng-eNBs), controlling corresponding (macro) cells QQ104-1 and QQ104-2. The base stations QQ102-1 and QQ102-2 are generally referred to herein collectively as base stations QQ102 and individually as base station QQ102. Likewise, the (macro) cells QQ104-1 and QQ104-2 are generally referred to herein collectively as (macro) cells QQ104 and individually as (macro) cell QQ104. The RAN may also include a number of low power nodes QQ106-1 through QQ106-4 controlling corresponding small cells QQ108-1 through QQ108-4. The low power nodes QQ106-1 through QQ106-4 can be small base stations (such as pico or femto base stations) or Remote Radio Heads (RRHs), or the like. Notably, while not illustrated, one or more of the small cells QQ108-1 through QQ108-4 may alternatively be provided by the base stations QQ102. The low power nodes QQ106-1 through QQ106-4 are generally referred to herein collectively as low power nodes QQ106 and individually as low power node QQ106. Likewise, the small cells QQ108-1 through QQ108-4 are generally referred to herein collectively as small cells QQ108 and individually as small cell QQ108. The cellular communications system QQ100 also includes a core network(s) QQ110. For example, in the embodiments described herein, the core network(s) QQ110 include a 5GC and an EPC, wherein there is interworking between the 5GC and EPC. The base stations QQ102 (and optionally the low power nodes QQ106) are connected to the core network(s) QQ110.

The base stations QQ102 and the low power nodes QQ106 provide service to wireless communication devices QQ112-1 through QQ112-5 in the corresponding cells QQ104 and QQ108. The wireless communication devices QQ112-1 through QQ112-5 are generally referred to herein collectively as wireless communication devices QQ112 and individually as wireless communication device QQ112. In the following description, the wireless communication devices QQ112 are oftentimes UEs, but the present disclosure is not limited thereto.

For interworking between EPC (4G) and 5GC, when an SMF/PGW-C is selected by the MME and the PGW-C/SMF receives the Create Session Request, the SMF/PGW-C will retrieve Session Management Subscription data from the UDM as specified in 5.2.2.2.5 Session Management Subscription Data Retrieval. Among other things, the Create Session Request includes information that indicates the requested APN/DNN, and the subscription data of the UE includes the subscribed S-NSSAI that contains the requested APN/DNN(information that indicates the subscribed network slice that contains the requested APN/DNN). Using this information, the SMF/PGW-C determines whether it is configured to support the subscribed S-NSSAI that contains the requested APN/DNN. in other words, the SMF/PGW-C determines whether it is able to (or configured to) support the subscribed network slice that uses the requested APN/DNN. if the SMF/PGW-C determines that it is not configured to support the subscribed S-NSSAI which contains the requested APN/DNN, the SMF/PGW-C signals to the NRF to perform a service discovery procedure, to find a SMF/PGW-C that does support a session on the UE subscribed S-NSSAI that contains the particular APN/DNN.

After that, there are two alternative approaches, each of which are described below in detail. In general, in the first alternative (Alternative 1), the SMF/PGW-C redirects the Create Session Request message to the SMF/PGW-C, found via the NRF discovery procedure, that does support the subscribed S-NSSAI and the requested APN. in the second alternative (Alternative 2), the SMF/PGW-C sends a Create Session Response message that includes information that indicates the new SMF/PGW-C that does support the subscribed S-NSSAI and the requested APN.

### Figure 3

### Alternative 1: Redirecting Create Session Request message

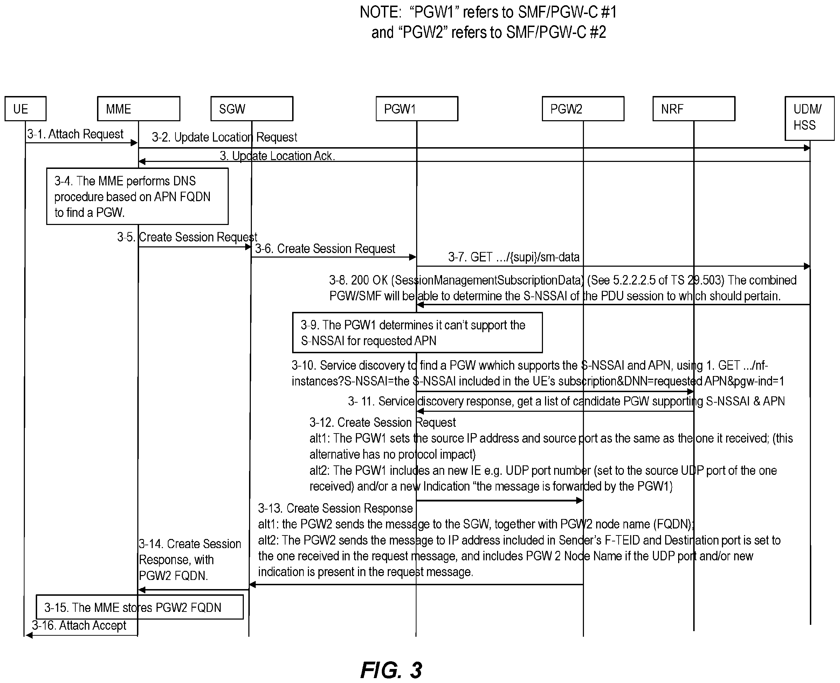

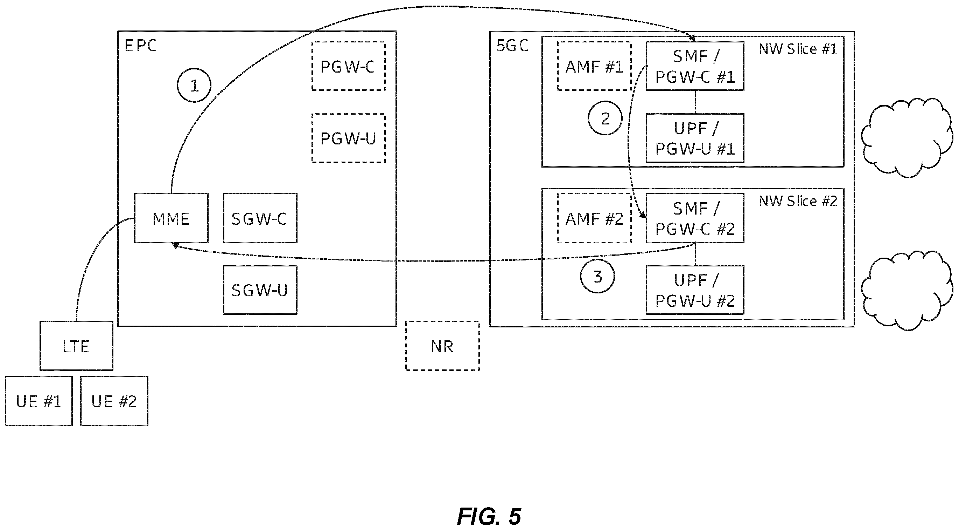

in this alternative, after the MME selected SMF/PGW-C receives the information from the NRF, the SMF/PGW-C redirects the Create Session Request message to the new SMF/PGW-C. One example procedure that illustrates this alternative is illustrated in **Figure 3**. The steps of the procedure of Figure 3 are as follows:
- Step 1: The UE sends an attach request to the MME in the EPC.
- Step 2: The MME sends an Update Location Request message to the UDM/HSS.
- Step 3: The UDM/HSS returns an Update Location Acknowledgement message back to the MME.
- Step 4: The MME selects a PGW. More specifically, the MME performs a DNS procedure based on the requested APN FQDN (from the attach request) to find a PGW. in this example, the selected PGW is more specifically a SMF/PGW-C #1 (i.e., a network function with combined PGW-C and SMF capability).
- Steps 5 and 6: The MME sends a Create Session Request message to SMF/PGW-C #1 via the SGW. In steps 5 and 6 of Figure 3, the MME that originates the Create Session Request message sends it to the SGW, which forwards it to the selected PGW (SMF/PGW-C #1). Also, see e.g. step 1 in Figure 5.
- Steps 7 and 8: SMF/PGW-C #1 retrieves Session Management Subscription data from the UDM as specified in 5.2.2.2.5 Session Management Subscription Data Retrieval. Among other things, the Create Session Request includes information that indicates the requested APN/DNN, and the subscription data of the UE includes the subscribed S-NSSAI that contains the requested APN/DNN(information that indicates the subscribed network slice that contains the requested APN/DNN).
- Step 9: Using this information, SMF/PGW-C #1 determines whether it is configured to support the subscribed S-NSSAI that contains the requested APN/DNN. In other words, the SMF/PGW-C #1 determines whether it is able to (configured to) support the subscribed network slice that uses the requested APN/DNN. in this example, SMF/PGW-C #1 determines that that it is not configured to support the subscribed S-NSSAI which contains the requested APN/DNN.
- Steps 10 and 11: Upon determining that it is not configured to support the subscribed S-NSSAI which contains the requested APN/DNN, SMF/PGW-C #1 signals to the NRF to perform a service discovery procedure to find a PGW that does support the subscribed S-NSSAI and the requested APN. in this example, the newly found PGW that does supported the subscribed S-NSSAI and the requested APN is denoted as SMF/PGW-C #2.
- Step 12: SMF/PGW-C #1 redirects the Create Session Request message to PGW2. in one aspect shown in step 12 of Figure 3, when the SMF/PGW-C #1 (selected by the MME) redirects the Create Session Request message to the new PGW (SMF/PGW-C #2), SMF/PGW-C #1 may operate according to one of the following sub-alternatives (also, see e.g. step 2 in Figure 5.):
   ∘ sub-alt 1: SMF/PGW-C #1 sets the source IP address and source port of the Create Session Request message to be the same as those received by SMF/PGW-C #2 (in step 6);
   ∘ sub-alt 2: SMF/PGW-C #1 includes a new Information Element (IE) in the Create Session Request message sent to SMF/PGW-C #2 (e.g. UDP port number set to the source UDP port of the one received in step 6 and/or a new Indication that the Create Session Request message has been transferred by the SMF/PGW-C #1).
- Steps 13 and 14: New SMF/PGW-C #2sends a Create Session Response message to the SGW, which forward the Crease Session Response message to the MME. Also, see e.g. step 3 in Figure 5. When the new SMF/PGW-C #2 sends the Create Session Response (CS Response) message in step 13, it may operate as follows according to the above alternatives:
   ∘ sub-alt 1: SMF/PGW-C #2 sends the Create Session Response message to the SGW, together with a new IE containing the SMF/PGW-C #2node name (FQDN). This information may be sent if the SMF/PGW-C #2is a combined PGW-C/SMF.
   ∘ sub-alt 2: SMF/PGW-C #2 sends the Create Session Response message to the IP address included in the Sender's F-TEID and the Destination port is set to the one received in the CSR message. The Create Session Response message includes the SMF/PGW-C #2 Node Name if the UDP port and/or new indication is present in the CS Request message.
- Step 15: The MME stores the SMF/PGW-C #2 FQDN.
- Step 16: The MME sends an Attach Accept message to the UE.

### Figure 4

### Alternative 2: Providing alternative SMFlPGVVC #2 in Create Session Response message

in another aspect, after the SMF/PGW-C signals to the NRF to perform a service discovery procedure to find a SMF/PGW-C that does support the subscribed S-NSSAI and the APN for the PDN connection, a second alternative can be used in which information that indicates SMF/PGW-C #2 is returned in the Create Session Response message.

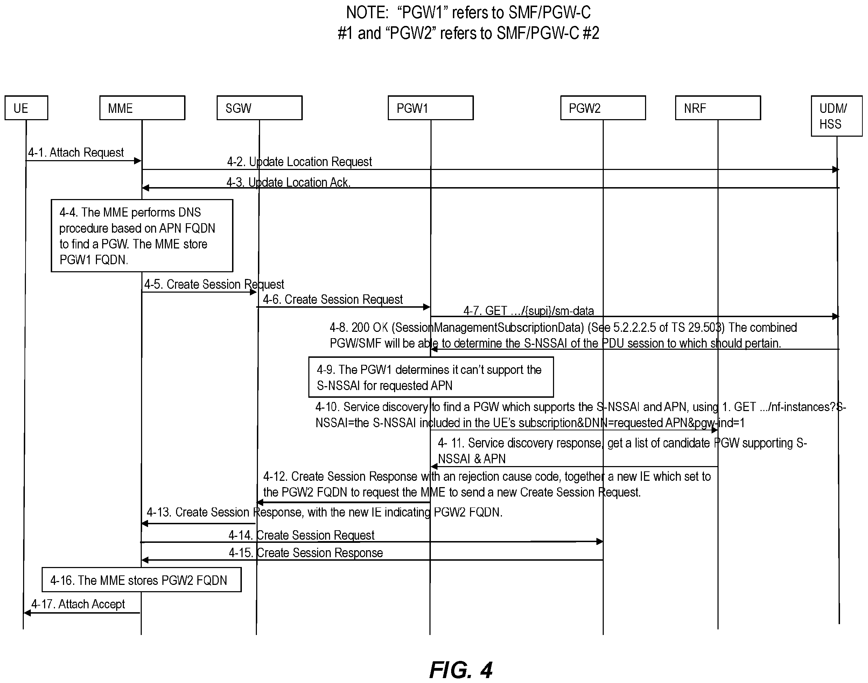

**Figure 4** illustrates one example of a procedure that utilizes Alternative 2. The steps of the procedure of Figure 4 are as follows:
- Steps 1-11: Same as Steps 1-11 of Figure 3.
- Step 12: The MME selected SMF/PGW-C #1rejects the Create Session Request message, and in the Create Session Response message includes a new IE, e.g. which may be set to the PGW Node Name (FQDN) and SMF/PGW-C #2IP address, and a new cause code value, preferably called "redirect to another PGW".
- Step 13: The SGW forwards the Create Session Response message to the MME.
- Step 14: The MME sends a new Create Session Request to the SMF/PGW-C #2indicated by the SMF/PGW-C #2IP address, where, in this example, the PDN connection creation is successful.
- Step 15: PGW returns a Create Session Response message to the MME.
- Step 16: The MME stores the SMF/PGW-C #2FQDN.
- Step 17: The MME sends an Attach Accept message to the UE.

Note that, in Alternative 2, the new SMF/PGW-C (SMF/PGW-C #2) includes its Fully Qualified Domain Name (FQDN) in the Create Session Response, and this information is utilized by the MME. Note that:
1. The PGW FQDN is used by the AMF if UE moves to 5G, to find the same combined SMF/PGW-C node which is serving this PDN connection, if the CS Request has been redirected (transferred), it shall inform the MME to update the PGW FQDN associated with the PDN connection.
2. In case UE will establish a subsequent PDN Connection to the same APN/DNN, the same PGW shall be selected.

The problem being addressed and aspects of the disclosed solution(s) can be summarized as follows:
- SMF/PGW-C #1 and SMF/PGW-C #2 both support the same APN/DNN but in different Network Slices.
- MME does not have sufficient information to select an SMF/PGW-C within the correct network slice.
- MME selects SMF/PGW-C #1.
- MME sends Create Session Request via SGW-C to SMF/PGW-C #1.
- SMF/PGW-C #1 finds correct SMF/PGW-C #2.
- SMF/PGW-C #1 redirects Create Session Request to SMF/PGW-C #2.
- SMF/PGW-C #1 will need to manipulate the IP header.
- SMF/PGW-C #2 replies via SGW-C to MME. In the reply message SMF/PGW-C #2 includes its Fully Qualified Domain Name (FQDN). The FQDN information element is not defined for the Create Session Response message (TS 29.274 ch. 7.2.2). It needs to be defined. Alternatively, the same information can be included in a Private Extension information element in the same message.

### Figure 7

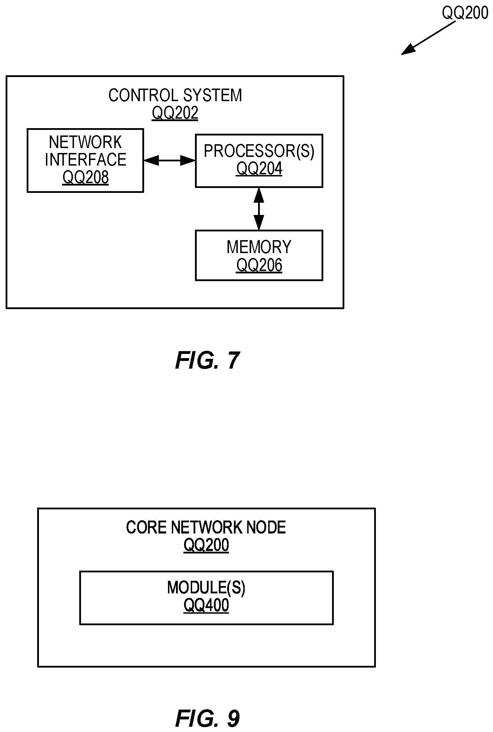

**Figure 7** is a schematic block diagram of a core network node QQ200 according to some embodiments of the present disclosure. The core network node QQ200 may be, e.g., a network node that implements an EPC node such as a MME, SGW, PGW, PGW-C, or the like, a 5GC NF such as a SMF, NRF, UDM/HSS, or the like, or a combined network function such as, e.g., an SMF/PGW-C. Optional features are represented by dashed boxes. As illustrated, the core network node QQ200 includes a control system QQ202 that includes one or more processors QQ204 (e.g., Central Processing Units (CPUs), Application Specific integrated Circuits (ASICs), Field Programmable Gate Arrays (FPGAs), and/or the like), memory QQ206, and a network interface QQ208. The one or more processors QQ204 are also referred to herein as processing circuitry. In one embodiment, the processors QQ204 execute software (e.g., stored in memory QQ206) to perform the functions of an EPC node, a 5GC NF, or a combined network function (e.g., SMF/PGG-C) according to any of the embodiments described herein.

### Figure 8

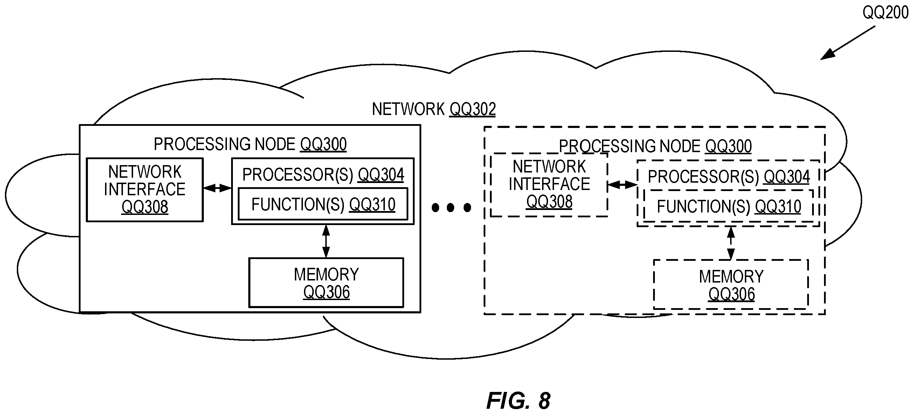

**Figure 8** is a schematic block diagram that illustrates a virtualized embodiment of the core network node QQ200 according to some embodiments of the present disclosure. This discussion is equally applicable to other types of network nodes. Further, other types of network nodes may have similar virtualized architectures. Again, optional features are represented by dashed boxes.

As used herein, a "virtualized" core network node is an implementation of the core network node QQ200 in which at least a portion of the functionality of the core network node QQ200 is implemented as a virtual component(s) (e.g., via a virtual machine(s) executing on a physical processing node(s) in a network(s)). The core network node QQ200 includes one or more processing nodes QQ300 each coupled to or included as part of a network(s) QQ302. if present, the control system QQ202 is connected to the processing node(s) QQ300 via the network QQ302. Each processing node QQ300 includes one or more processors QQ304 (e.g., CPUs, ASICs, FPGAs, and/or the like), memory QQ306, and a network interface QQ308.

in this example, functions QQ310 of the core network node QQ200 described herein (e.g., functions of a an EPC node, a 5GC NF, or a combined network function (e.g., SMF/PGG-C) according to any of the embodiments described herein, e.g., with respect to Figure 3 or 4) are implemented at the one or more processing nodes QQ300 or distributed across two or more processing nodes QQ300 in any desired manner. In some particular embodiments, some or all of the functions QQ310 of the core network node QQ200 described herein are implemented as virtual components executed by one or more virtual machines implemented in a virtual environment(s) hosted by the processing node(s) QQ300.

in some embodiments, a computer program including instructions which, when executed by at least one processor, causes the at least one processor to carry out the functionality of a core network node QQ200 or a node (e.g., a processing node QQ300) implementing one or more of the functions QQ310 of the core network node QQ200 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

### Figure 9

**Figure 9** is a schematic block diagram of the core network node QQ200 according to some other embodiments of the present disclosure. The core network node QQ200 includes one or more modules QQ400, each of which is implemented in software. The module(s) QQ400 provide the functionality of the core network node QQ200 described herein (e.g., functions of an EPC node, a 5GC NF, or a combined network function (e.g., SMF/PGG-C) according to any of the embodiments described herein, e.g., with respect to Figure 3 or 4). This discussion is equally applicable to the processing node QQ300 of Figure 8 where the modules QQ400 may be implemented at one of the processing nodes QQ300 or distributed across multiple processing nodes QQ300 and/or distributed across the processing node(s) QQ300 and the control system QQ202.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| | | |
|---|---|---|
| • | 2G | Second Generation |
| • | 3G | Third Generation |
| • | 3GPP | Third Generation Partnership Project |
| • | 4G | Fourth Generation |
| • | 5G | Fifth Generation |
| • | AF | Application Function |
| • | AMF | Access and Mobility Management Function |
| • | AN | Access Network |
| • | AP | Access Point |
| • | AUSF | Authentication Server Function |
| • | BS | Base Station |
| • | BSC | Base Station Controller |
| • | BTS | Base Transceiver Station |
| • | CDMA | Code Division Multiple Access |
| • | DL | Downlink |
| • | DN | Data Network |
| • | DNS | Domain Name System |
| • | eNB | Enhanced or Evolved Node B |
| • | EPC | Evolved Packet Core |
| • | E-UTRA | Evolved Universal Terrestrial Radio Access |
| • | E-UTRAN | Evolved Universal Terrestrial Radio Access Network |
| • | FDD | Frequency Division Duplexing |
| • | FQDN | Fully Qualified Domain Name |
| • | GERAN | Global System for Mobile (GSM) Communications Enhanced Data Rates for GSM Evolution Radio Access Network |
| • | gNB | New Radio Base Station |
| • | GSM | Global System for Mobile Communications |
| • | HO | Handover |
| • | HSPA | High Speed Packet Access |
| • | loT | Internet of Things |
| • | IP | Internet Protocol |
| • | LAN | Local Area Network |
| • | LTE | Long Term Evolution |
| • | M2M | Machine-to-Machine |
| • | MME | Mobility Management Entity |
| • | MSC | Mobile Switching Center |
| • | MTC | Machine Type Communication |
| • | NEF | Network Exposure Function |
| • | NF | Network Function |
| • | NFV | Network Function Virtualization |
| • | NR | New Radio |
| • | NRF | Network Function Repository Function |
| • | NSSF | Network Slice Selection Function |
| • | O&M | Operation and Maintenance |
| • | OSS | Operations Support System |
| • | OTT | Over-the-Top |
| • | PCF | Policy Control Function |
| • | PDN | Public Data Network, or Packet Data Network |
| • | PGW | Packet Data Network Gateway |
| • | PGW-C | PGW Control Plane Function |
| • | PGW-U | PGW User Plane Function |
| • | PLMN | Public Land Mobile Network |
| • | PSTN | Public Switched Telephone Networks |
| • | QoS | Quality of Service |
| • | RAN | Radio Access Network |
| • | RAT | Radio Access Technology |
| • | RNC | Radio Network Controller |
| • | SCEF | Service Capability Exposure Function |
| • | SGW | Serving Gateway |
| • | SGW-C | SGW Control Plane Function |
| • | SGW-U | SGW User Plane Function |
| • | SI | System Information |
| • | SIB | System Information Block |
| • | SIM | Subscriber Identity Module |
| • | SMF | Session Management Function |
| • | TCP | Transmission Control Protocol |
| • | UDM | Unified Data Management |
| • | UE | User Equipment |
| • | UL | Uplink |
| • | UMTS | Universal Mobile Telecommunications System |
| • | UPF | User Plane Function |
| • | USIM | Universal Subscriber Identity Module |
| • | UTRA | Universal Terrestrial Radio Access |
| • | UTRAN | Universal Terrestrial Radio Access Network |
| • | VNE | Virtual Network Element |
| • | VNF | Virtual Network Function |
| • | WAN | Wide Area Network |
| • | WCDMA | Wideband Code Division Multiple Access |
| • | WD | Wireless Device |
| • | WLAN | Wireless Local Area Network |

### APPENDIX

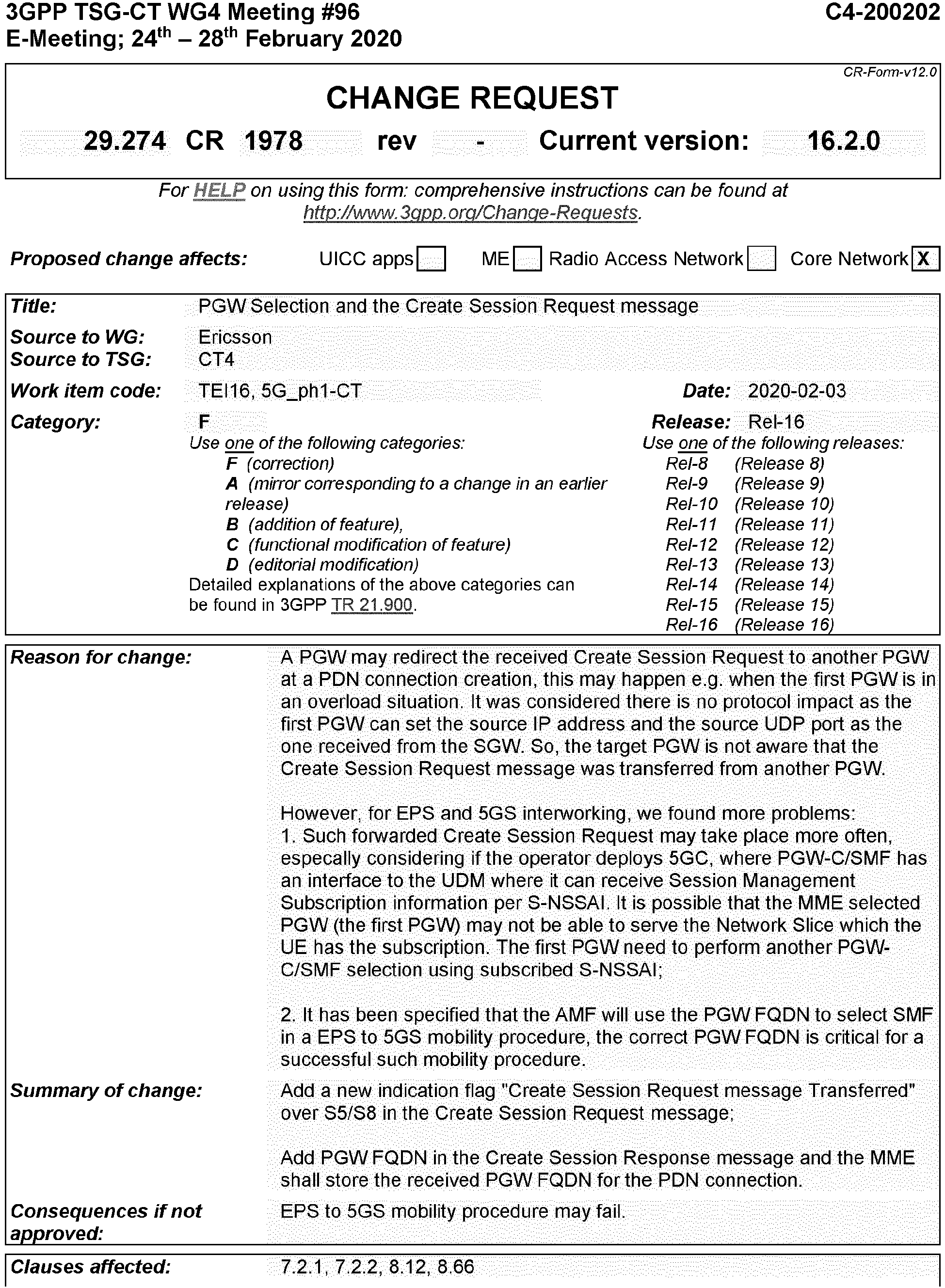

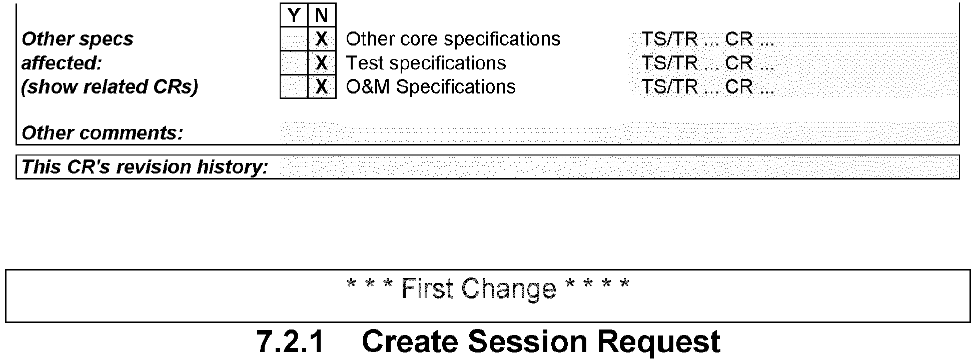

The direction of this message shall be from MME/S4-SGSN to SGW and from SGW to PGW, and from ePDG/TWAN to the PGW (see Table 6.1-1).

The Create Session Request message shall be sent on the S 11 interface by the MME to the SGW, and on the S5/S8 interface by the SGW to the PGW as part of the procedures:
- E-UTRAN Initial Attach when a PDN connection needs to be established through the SGW and PGW
- Handover from Trusted or Untrusted Non-3GPP IP Access to E-UTRAN with GTP on S5/S8 interface (see clauses 8.2, 8.6 and 16.11 of 3GPP TS 23.402 [45])
- UE requested PDN connectivity when a PDN connection needs to be established through the SGW and PGW
- Addition of a 3GPP access of NBIFOM procedure as specified by 3GPP TS 23.161 [71]

The message shall also be sent on S4 interface by the SGSN to the SGW, and on the S5/S8 interface by the SGW to the PGW as part of the procedures:
- PDP Context Activation
- Handover from Trusted or Untrusted Non-3GPP IP Access to UTRAN/GERAN with GTP on S5/S8 interface (see clauses 8.2, 8.6 and 16.11 of 3GPP TS 23.402 [45])
- Addition of a 3GPP access of the NBIFOM procedure as specified by 3GPP TS 23.161 [71]

The message shall also be sent on the S 11 interface by the MME to the SGW as part of the procedures:
- Tracking Area Update procedure with Serving GW change
- S1/X2-based handover with SGW change
- UTRAN Iu mode to E-UTRAN Inter RAT handover with SGW change
- GERAN A/Gb mode to E-UTRAN Inter RAT handover with SGW change
- 3G Gn/Gp SGSN to MME combined hard handover and SRNS relocation procedure
- Gn/Gp SGSN to MME Tracking Area Update procedure
- Restoration of PDN connections after an SGW failure if the MME and PGW support these procedures as specified in 3GPP TS 23.007 [17]
- MME triggered Serving GW relocation
- Handover from Trusted or Untrusted Non-3GPP IP Access to E-UTRAN with PMIP on S5/S8 interface (see clauses 8.2 and 16.11 of 3GPP TS 23.402 [45])
and on the S4 interface by the SGSN to the SGW as part of the procedures:
- Routing Area Update with MME interaction and with SGW change
- Gn/Gp SGSN to S4 SGSN Routing Area Update
- Inter SGSN Routeing Area Update Procedure and Combined Inter SGSN RA / LA Update using S4 with SGW change
- Iu mode RA Update Procedure using S4 with SGW change
- E-UTRAN to UTRAN Iu mode Inter RAT handover with SGW change
- E-UTRAN to GERAN A/Gb mode Inter RAT handover with SGW change
- Serving RNS relocation using S4 with SGW change
- Combined hard handover and SRNS relocation using S4 with SGW change
- Combined Cell / URA update and SRNS relocation using S4 with SGW change
- Enhanced serving RNS relocation with SGW relocation
- Restoration of PDN connections after an SGW failure if the SGSN and PGW support these procedures as specified in 3GPP TS 23.007 [17]
- S4-SGSN triggered Serving GW relocation
- Handover from Trusted or Untrusted Non-3GPP IP Access to UTRAN/GERAN with PMIP on S5/S8 interface (see clauses 8.2 and 16.11 of 3GPP TS 23.402 [45])
and on the S2b interface by the ePDG to the PGW as part of the procedures:
- Initial Attach with GTP on S2b
- UE initiated Connectivity to Additional PDN with GTP on S2b
- Handover to Untrusted Non-3GPP IP Access with GTP on S2b (See clause 8.6 of 3GPP TS 23.402 [45])
- Initial Attach for emergency session (GTP on S2b)
- Addition of an access using S2b of NBIFOM procedure as specified by 3GPP TS 23.161 [71]
and on the S2a interface by the TWAN to the PGW as part of the procedure:
- Initial Attach in WLAN on GTP S2a
- Initial Attach in WLAN for Emergency Service on GTP S2a
- UE initiated Connectivity to Additional PDN with GTP on S2a
- Handover to TWAN with GTP on S2a (See clause 16.10 of 3GPP TS 23.402 [45])
- Addition of an access using S2a of NBIFOM procedure as specified by 3GPP TS 23.161 [71].

If the new Create Session Request received by the SGW collides with an existing active PDN connection context (the existing PDN connection context is identified with the tuple [IMSI, EPS Bearer ID], where IMSI shall be replaced by TAC and SNR part of ME Identity for emergency or RLOS attached UE without UICC or authenticated IMSI), this Create Session Request shall be treated as a request for a new session. Before creating the new session, the SGW should delete:
- the existing PDN connection context locally, if the Create Session Request is received with the TEID set to zero in the header, or if it is received with a TEID not set to zero in the header and it collides with the default bearer of an existing PDN connection context;
- the existing dedicated bearer context locally, if the Create Session Request collides with an existing dedicated bearer context and the message is received with a TEID not set to zero in the header.

In the former case, if the PGW S5/S8 IP address for control plane received in the new Create Session Request is different from the PGW S5/S8 IP address for control plane of the existing PDN connection, the SGW should also delete the existing PDN connection in the corresponding PGW by sending a Delete Session Request message.
NOTE 1: The SGW can send the Create Session Request and Delete Session Request over S5/S8 asynchronously, e.g. the SGW can send the Delete Session Request and then the Create Session Request without having to wait for the Delete Session Response. It does not matter if the PGW happens to receive the Delete Session Request after the Create Session Request since the PGW assigns a different S5/S8 F-TEID for control plane to the new PDN connection.

If the new Create Session Request received by the PGW collides with an existing PDN connection context (the existing PDN connection context is identified with the triplet [IMSI, EPS Bearer ID, Interface type], where applicable Interface type here is S2a TWAN GTP-C interface or S2b ePDG GTP-C interface or S5/S8 SGW GTP-C interface, and where IMSI shall be replaced by TAC and SNR part of ME Identity for emergency or RLOS attached UE without UICC or authenticated IMSI), this Create Session Request shall be treated as a request for a new session. Before creating the new session, the PGW should delete:
- the existing PDN connection context, if the Create Session Request collides with the default bearer of an existing PDN connection context;
- the existing dedicated bearer context, if the Create Session Request collides with a dedicated bearer of an existing PDN connection context.

The PGW shall allocate a new PGW S5/S8 F-TEID for control plane to the new PDN connection, i.e. not the same F-TEID value as the one which was assigned to the existing PDN connection.
NOTE 2: With GTP based S2a and S2b, the EPS Bearer IDs assigned for specific UE over S2a between the TWAN and PGW and over S2b between an ePDG and PGW are independent of the EPS Bearer IDs assigned for the same UE over S5/S8 and may overlap in value (see 3GPP TS 23.402 [45] clause 4.6.2).
NOTE 3: Only the TAC and SNR part of the ME Identity is used to identify an emergency or RLOS attached UE without UICC or authenticated IMSI.

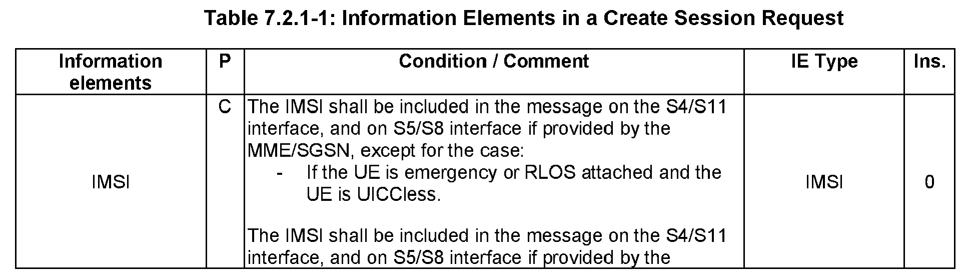

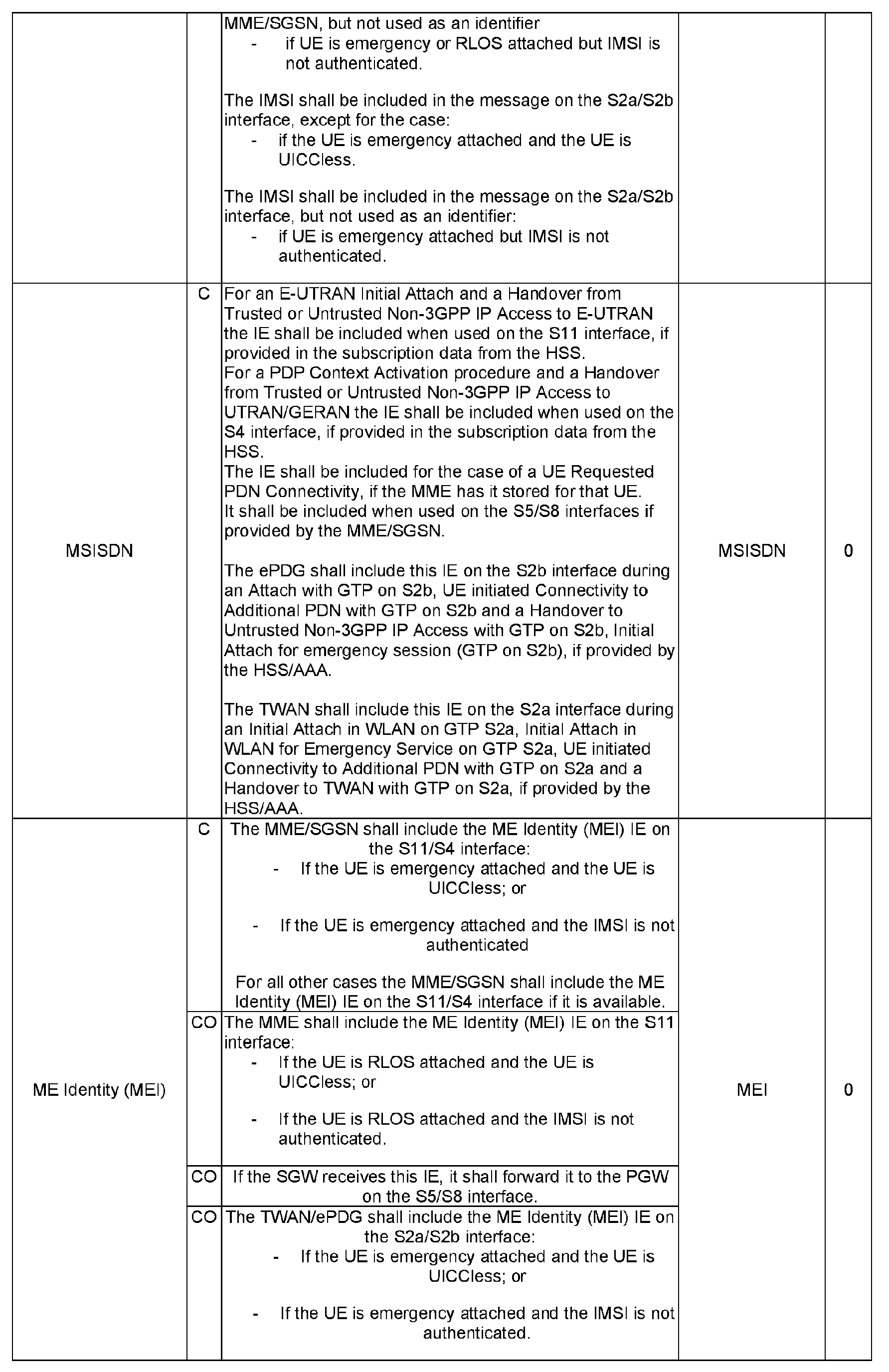

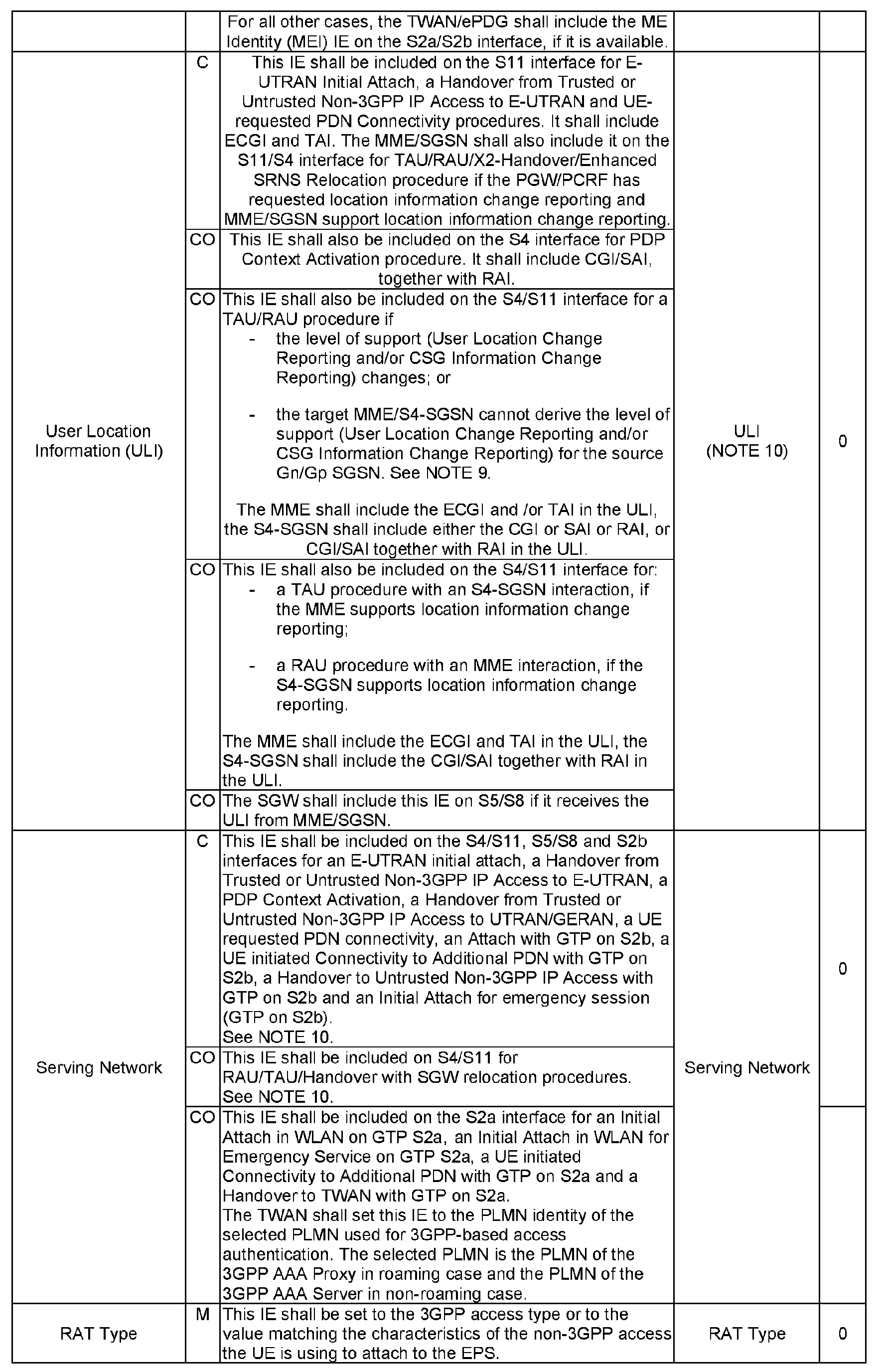

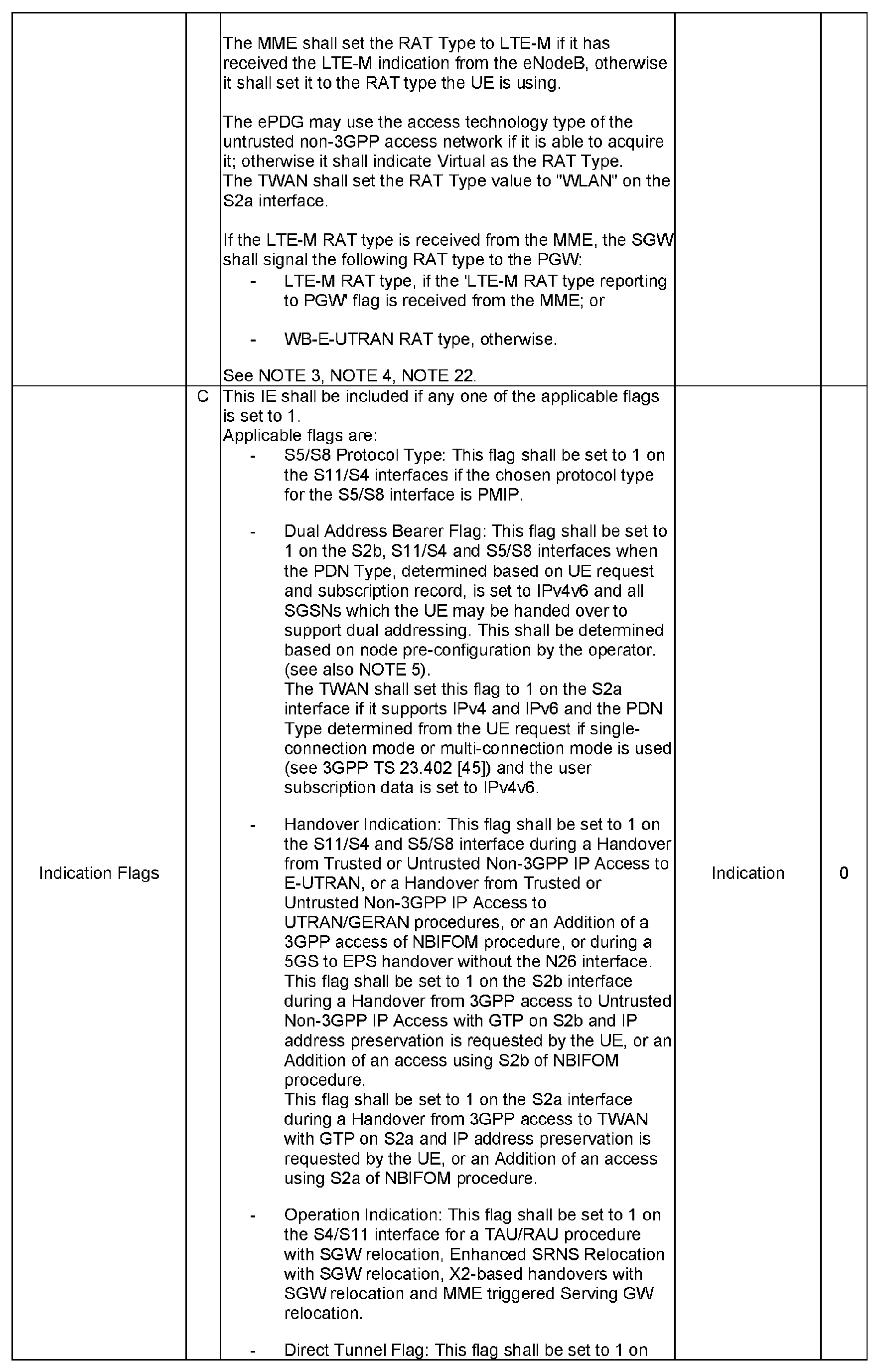

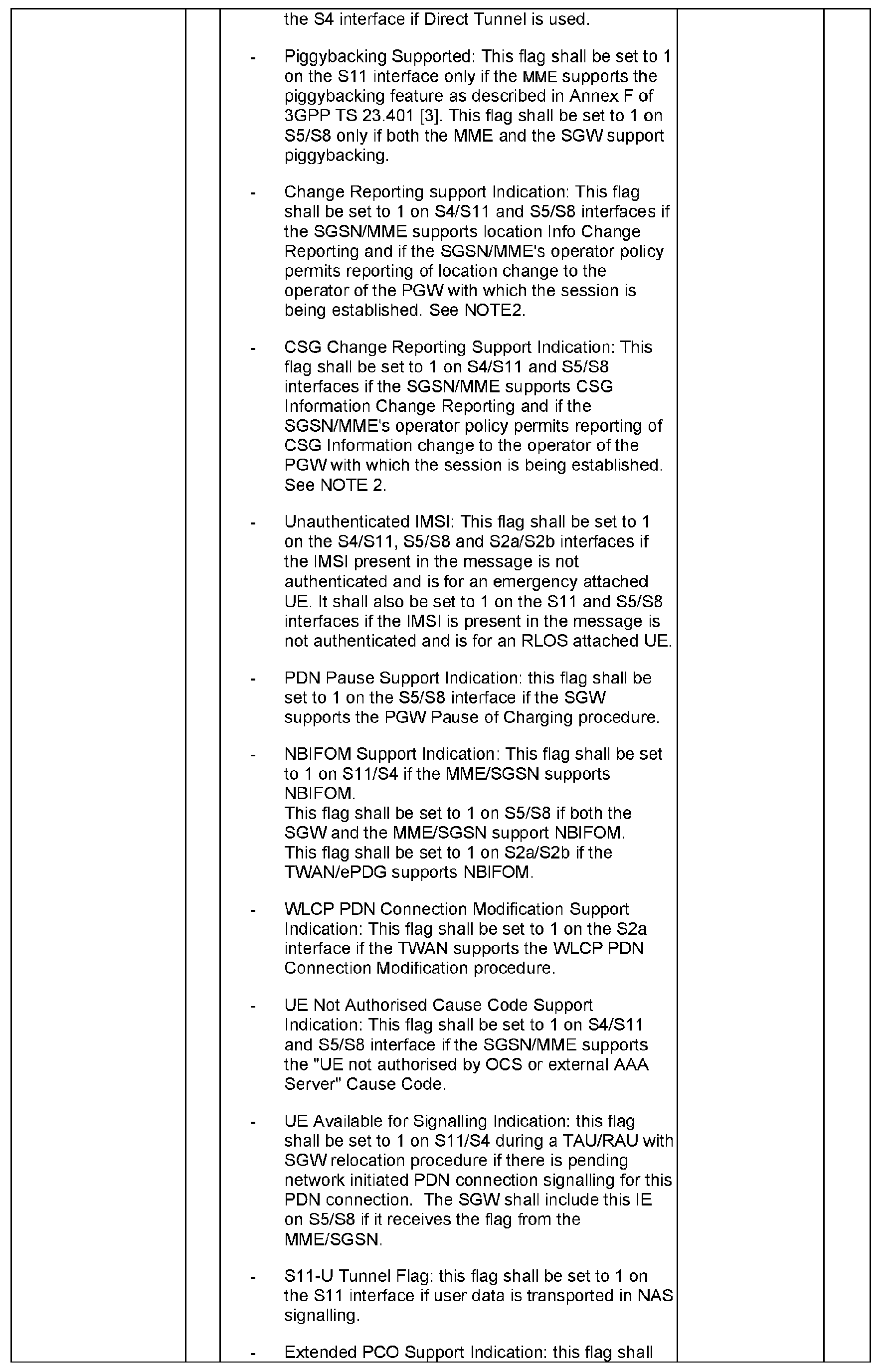

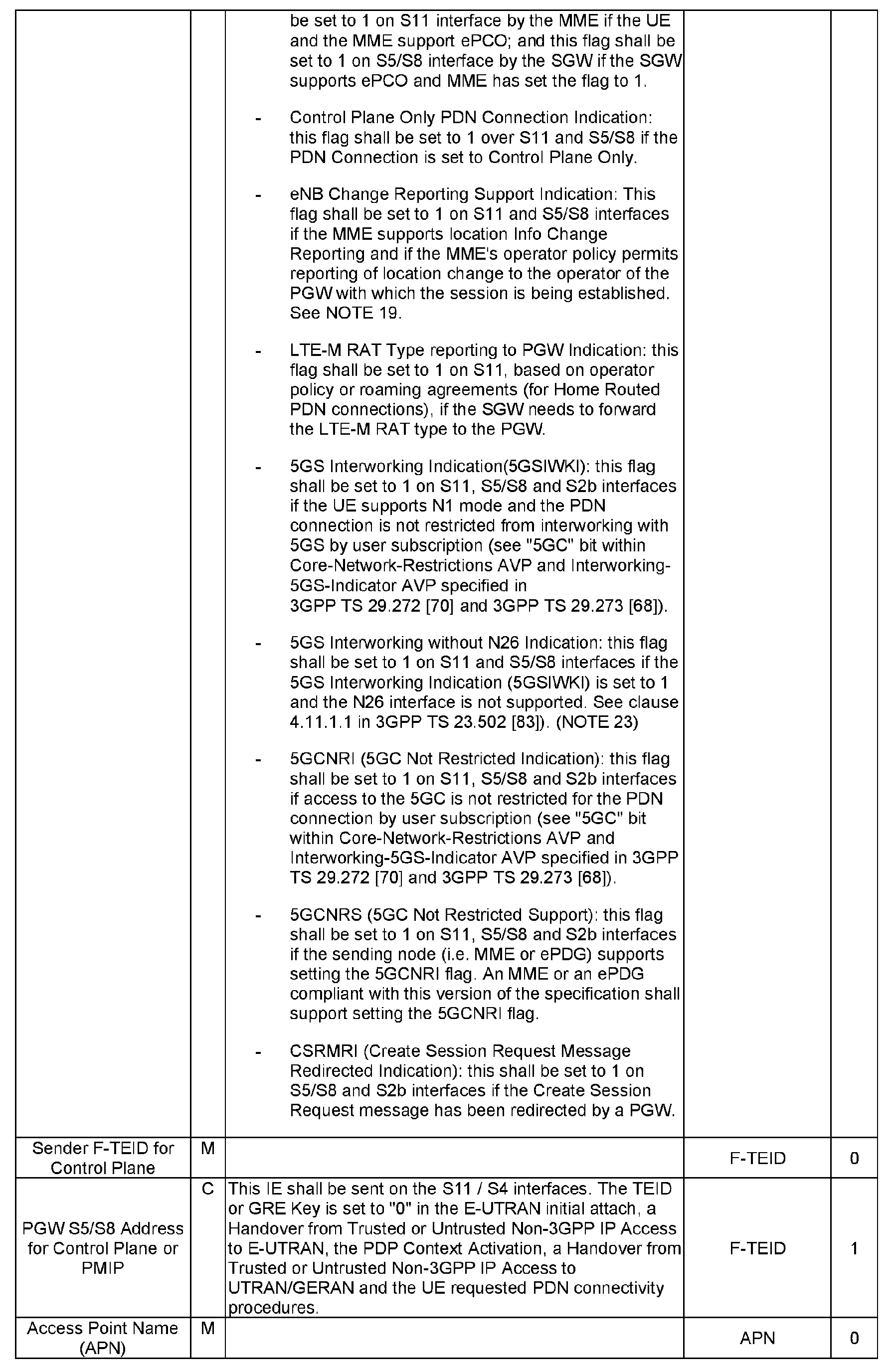

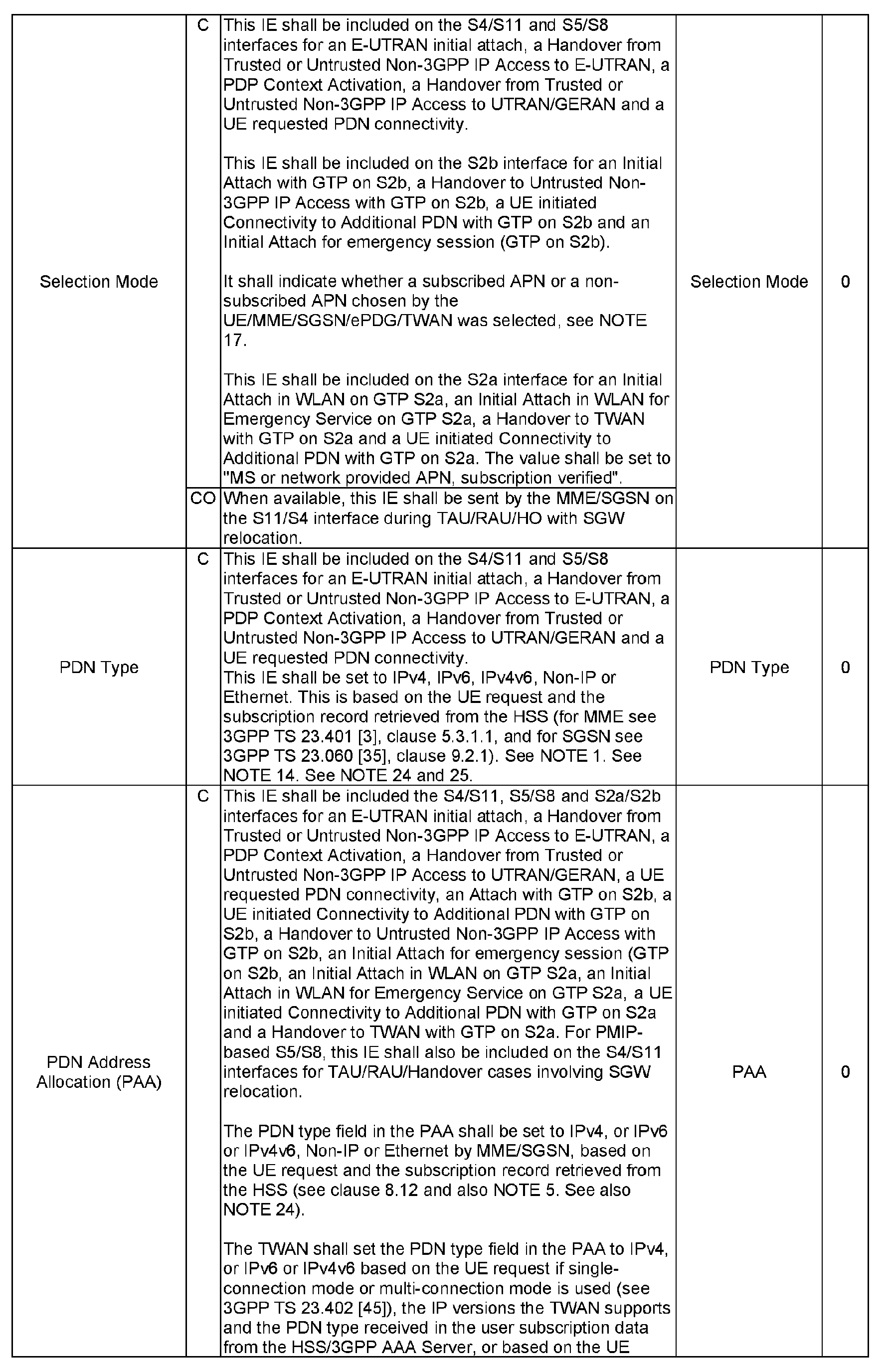

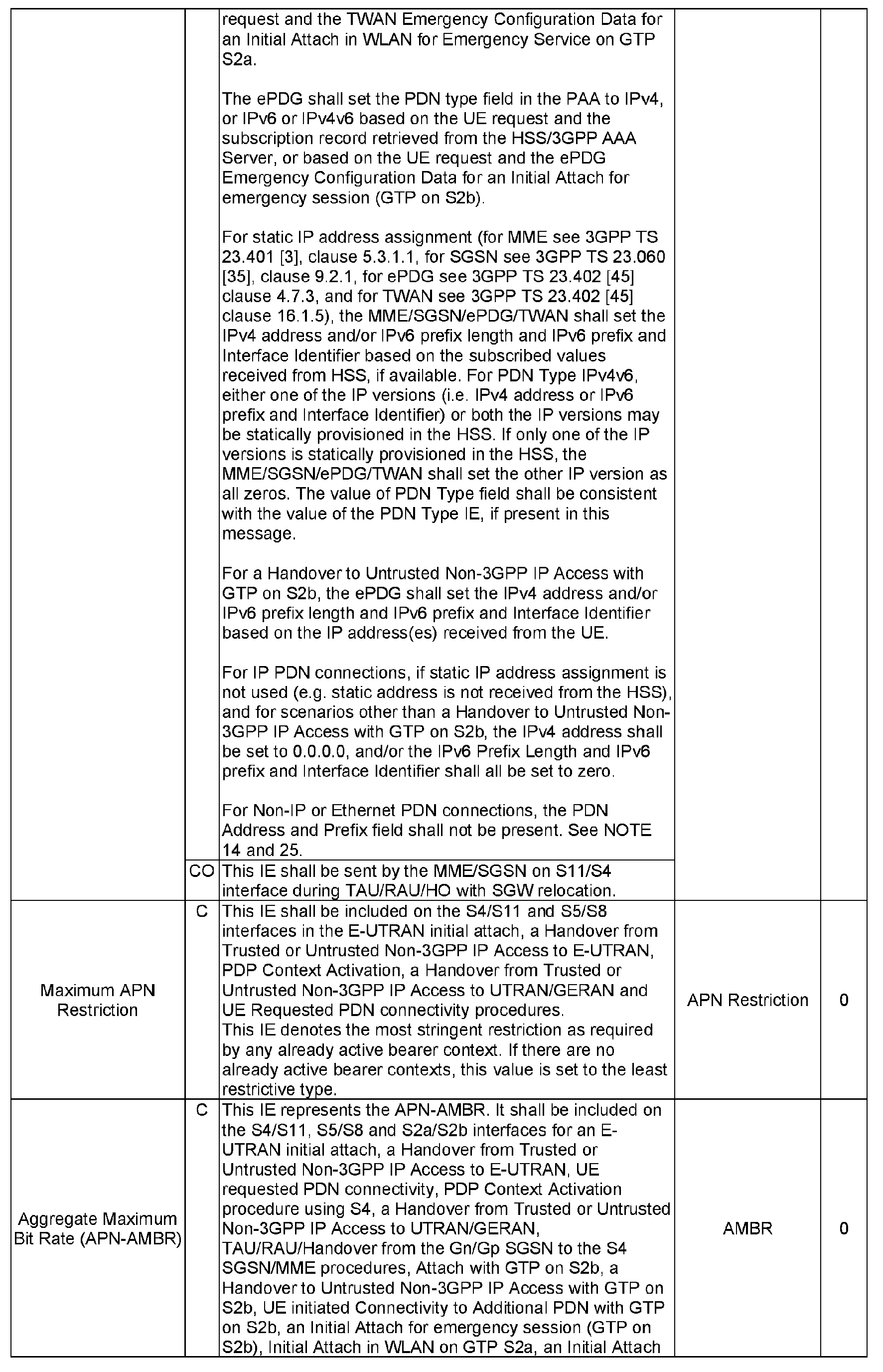

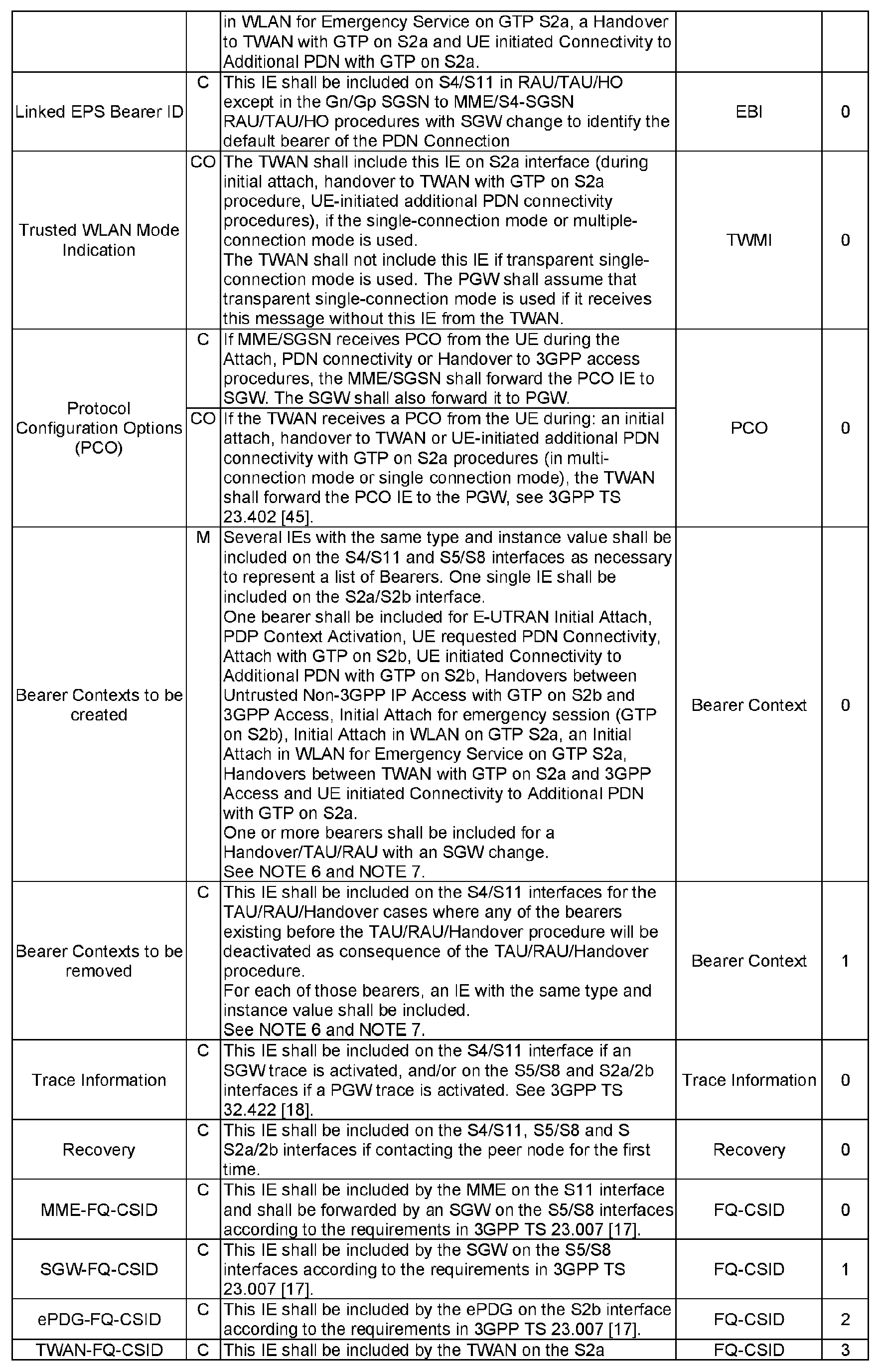

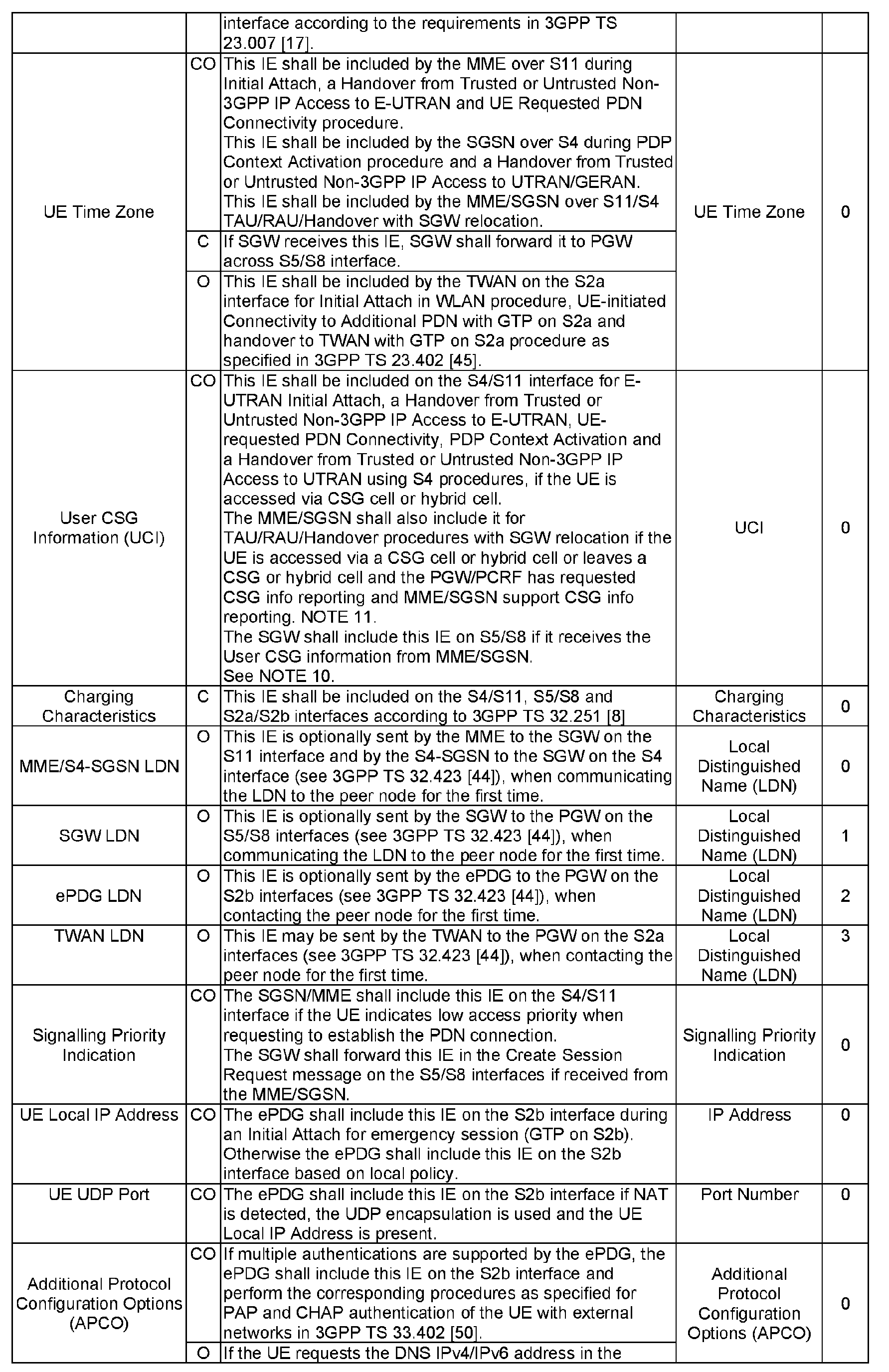

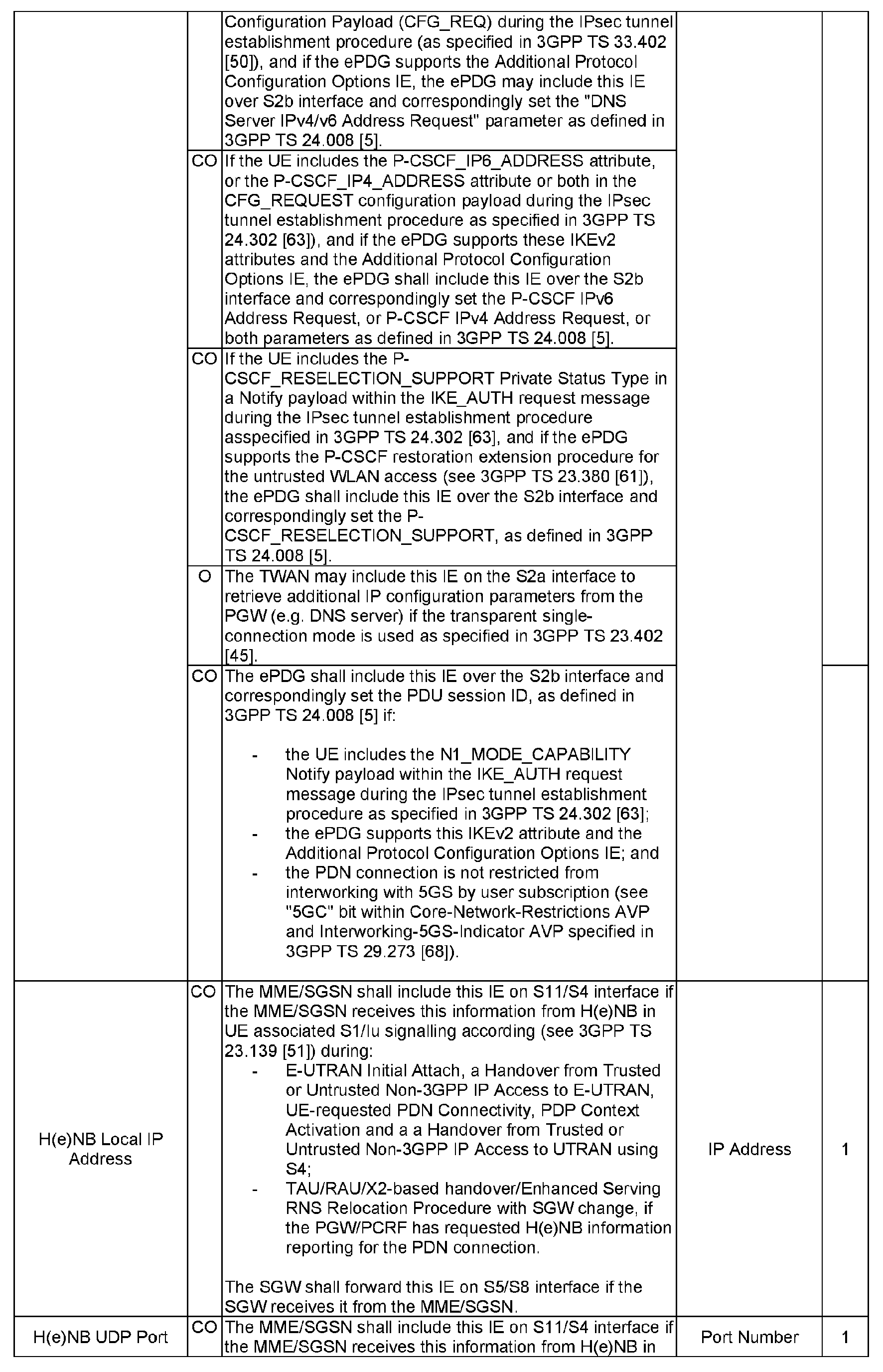

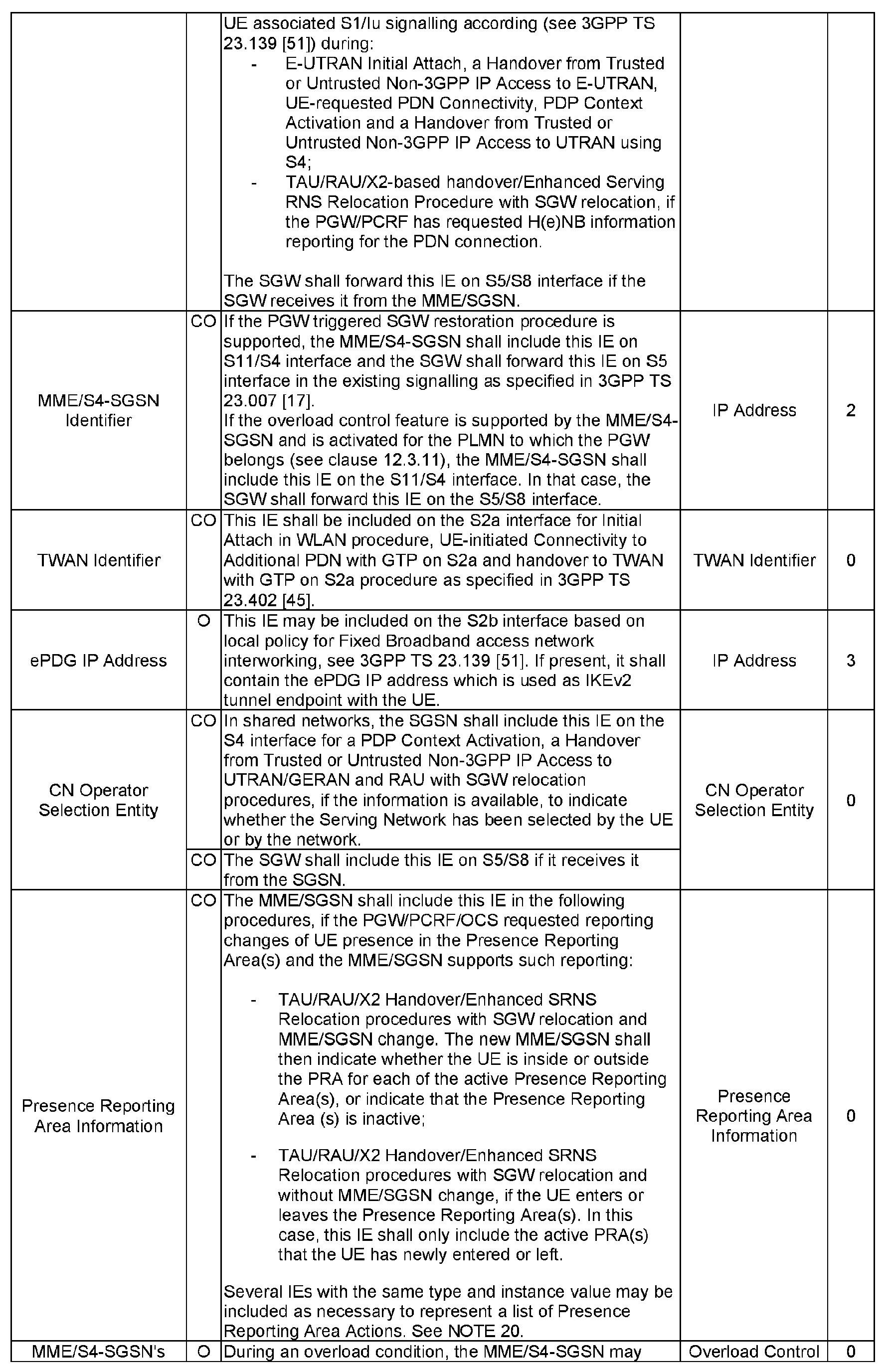

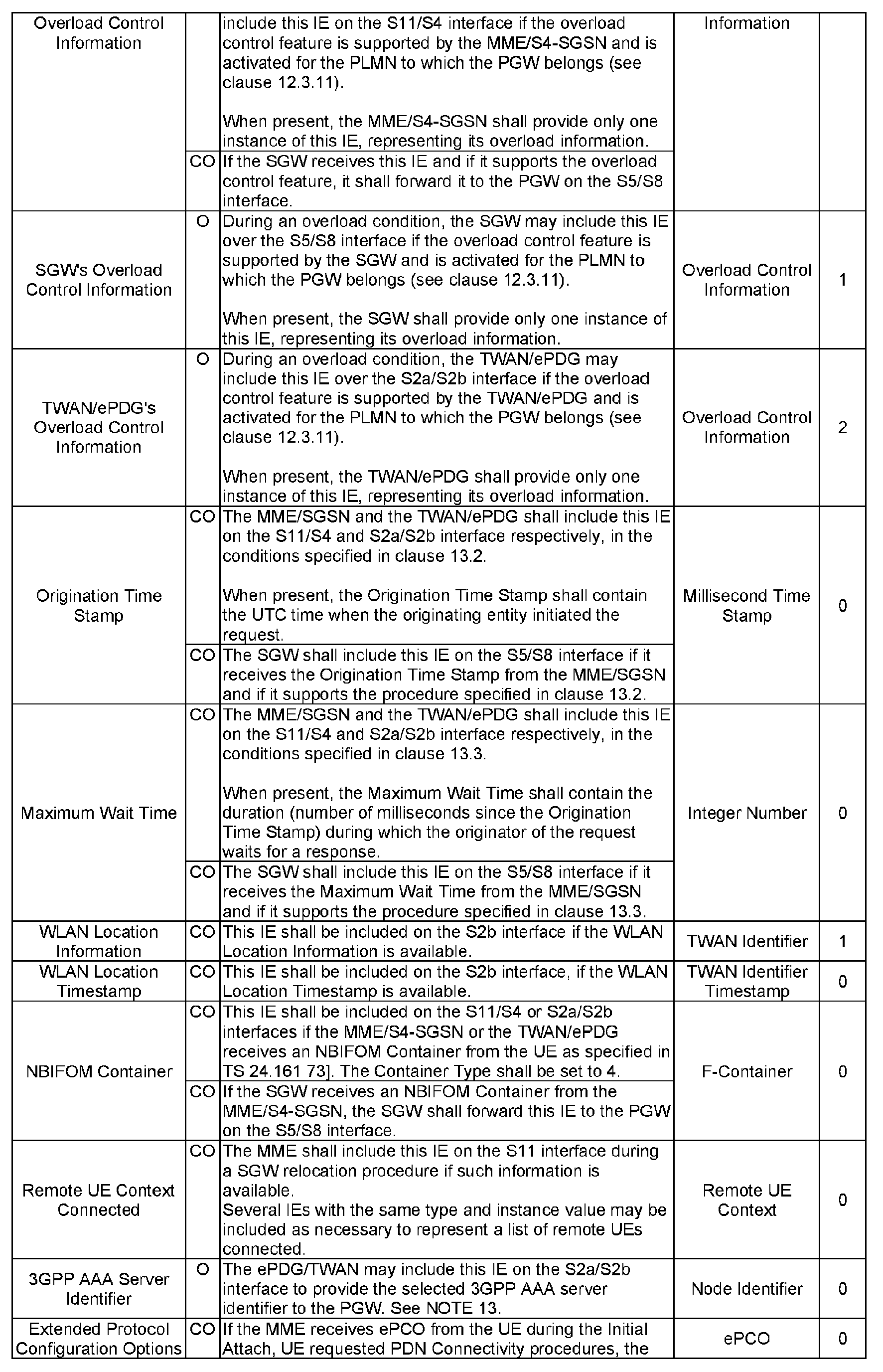

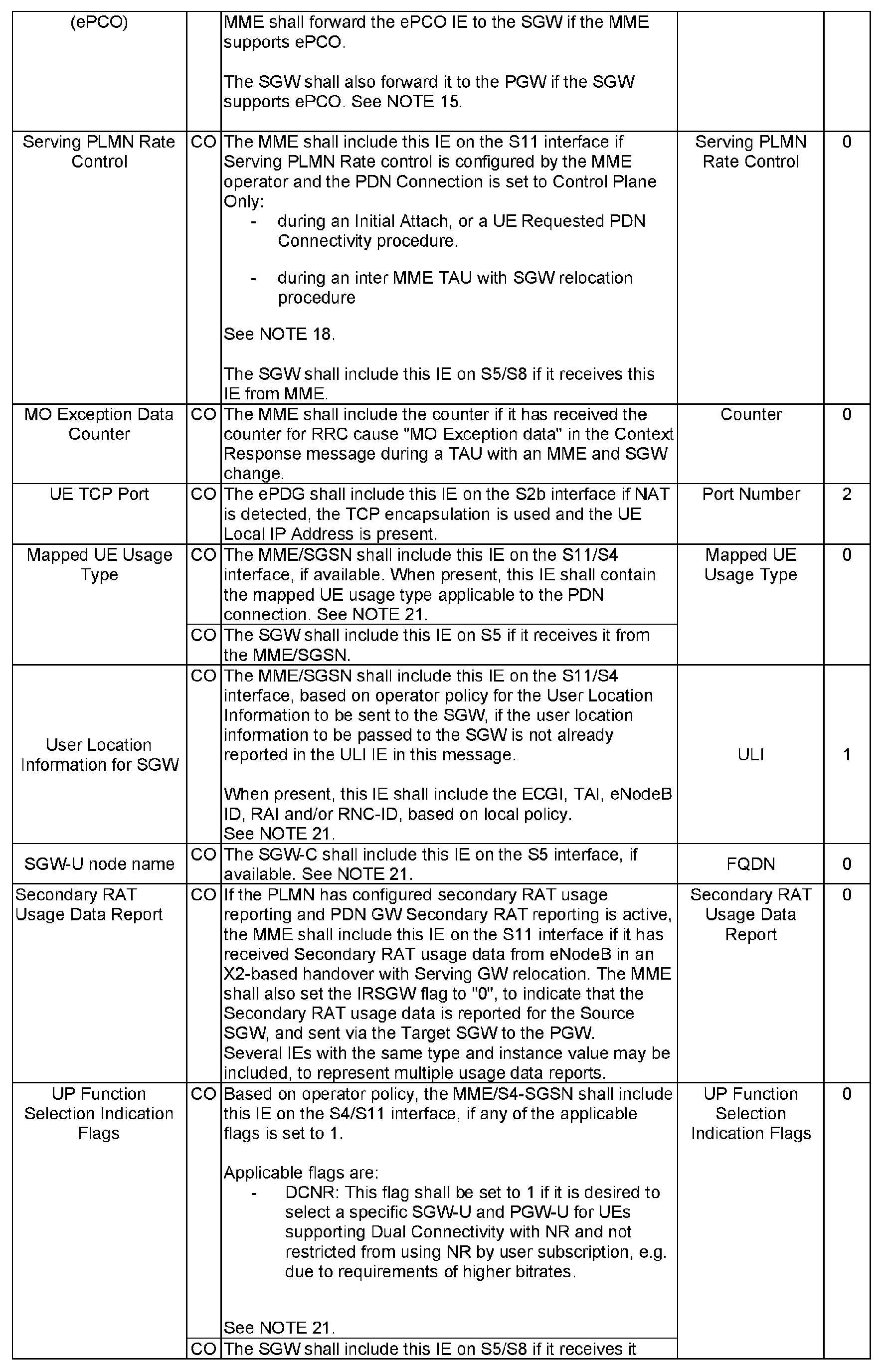

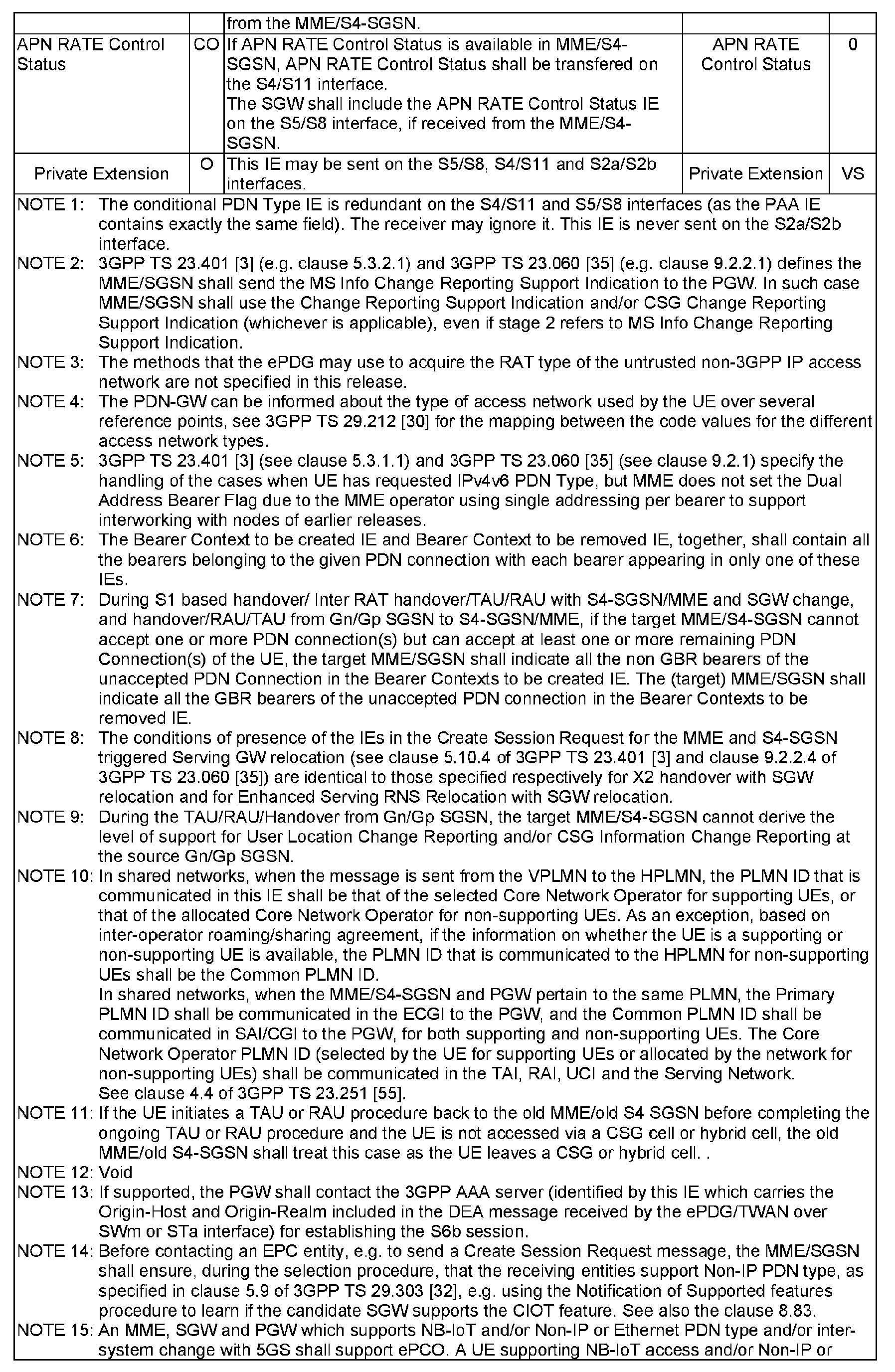

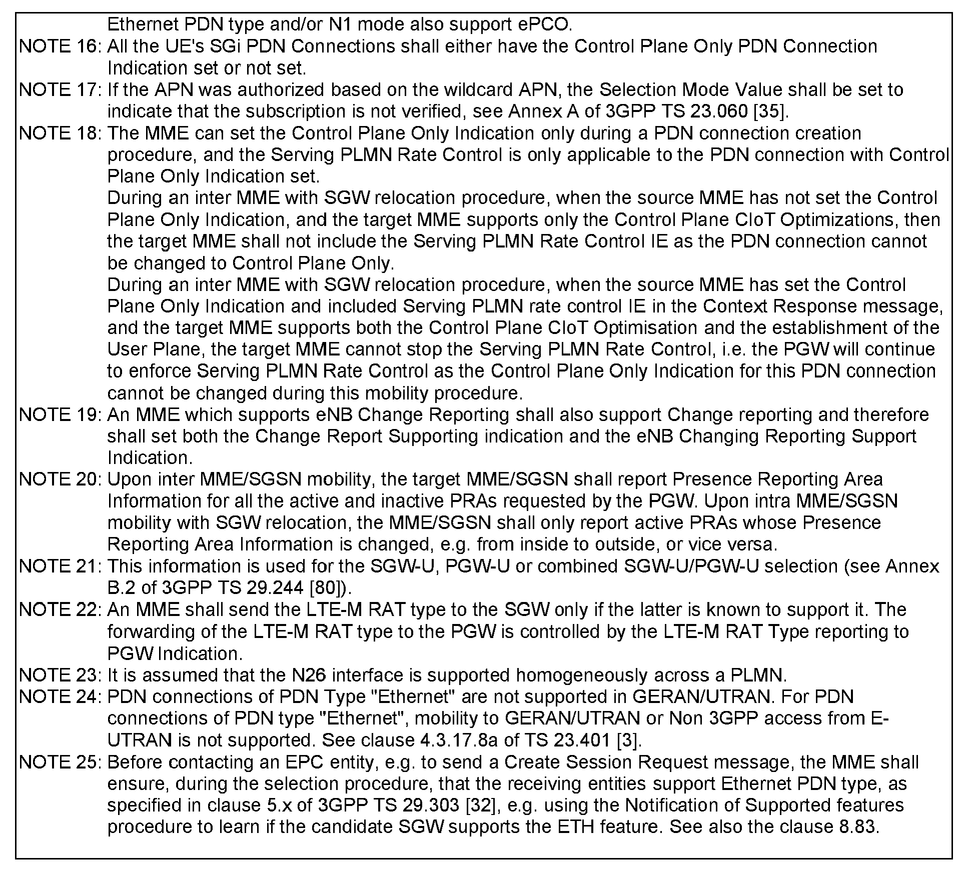

**Table 7.2.1-2: Bearer Context to be created within Create Session Request**

| Octet 1 | Bearer Context IE Type = 93 (decimal) | | | |
|---|---|---|---|---|
| Octets 2 and 3 | Length = n | | | |
| Octet 4 | and Instance fields | | | |
| **Information elements** | **P** | **Condition / Comment** | **IE Type** | **Ins.** |
| EPS Bearer ID | M | | EBI | 0 |
| TFT | O | This IE may be included on the S4/S11 interfaces. | Bearer TFT | 0 |
| S1-U eNodeB F-TEID | C | This IE shall be included on the S11 interface for X2-based handover with SGW relocation. | F-TEID | 0 |
| S4-U SGSN F-TEID | C | This IE shall be included on the S4 interface if the S4-U interface is used. | F-TEID | 1 |
| S5/S8-U SGW F-TEID | C | This IE shall be included on the S5/S8 interface for an "E-UTRAN Initial Attach", a Handover from Trusted or Untrusted Non-3GPP IP Access to E-UTRAN, a "PDP Context Activation", a Handover from Trusted or Untrusted Non-3GPP IP Access to UTRAN/GERAN or a "UE Requested PDN Connectivity". | F-TEID | 2 |
| S5/S8-U PGW F-TEID | C | This IE shall be included on the S4 and S11 interfaces for the TAU/RAU/Handover cases when the GTP-based S5/S8 is used. | F-TEID | 3 |
| | CO | For PMIP-based S5/S8, this IE shall be included on the S11/S4 interface for the TAU/RAU/Handover cases if the PGW provided an alternate address for user plane, i.e. an IP address for user plane which is different from the IP address for control plane. | | |
| | | When present, this IE shall contain the alternate IP address for user plane and the uplink GRE key. See NOTE 1. | | |
| S12 RNC F-TEID | CO | This IE shall be included on the S4 interface if the S12 interface is used in the Enhanced serving RNS relocation with SGW relocation procedure. | F-TEID | 4 |
| S2b-U ePDG F-TEID | C | This IE shall be included on the S2b interface for an Attach with GTP on S2b, a UE initiated Connectivity to Additional PDN with GTP on S2b, a Handover to Untrusted Non-3GPP IP Access with GTP on S2b and an Initial Attach for emergency session (GTP on S2b). | F-TEID | 5 |
| S2a-U TWAN F-TEID | C | This IE shall be included on the S2a interface for an Initial Attach in WLAN on GTP S2a, an Initial Attach in WLAN for Emergency Service on GTP S2a, a UE initiated Connectivity to Additional PDN with GTP on S2a and a Handover to TWAN with GTP on S2a. | F-TEID | 6 |
| Bearer Level QoS | M | | Bearer QoS | 0 |
| S11-U MME F-TEID | CO | This IE shall be sent on the S11 interface, if S11-U is being used, during the E-UTRAN Initial Attach and UE requested PDN connectivity procedures. This IE may also be sent on the S11 interface, if S11-U is being used, during a Tracking Area Update procedure with Serving GW change, if the MME needs to establish the S11-U tunnel. See NOTE 2. | F-TEID | 7 |
| NOTE 1: | | | | |
| NOTE 2: | | | | |

**Table 7.2.1-3: Bearer Context to be removed within Create Session Request**

| Octet 1 | | Bearer Context IE Type = 93 (decimal) | | | |
|---|---|---|---|---|---|
| Octets 2 and 3 | | Length = n | | | |
| Octet 4 | | Spare and Instance fields | | | |
| **Information elements** | | **P** | **Condition / Comment** | **IE Type** | **Ins.** |
| EPS Bearer ID | | M | | EBI | 0 |
| S4-U SGSN F-TEID | | C | This IE shall be sent on the S4 interface if the S4-U interface is used. See NOTE 1. | F-TEID | 0 |
| NOTE 1: | The conditional S4-U SGSN F-TEID IE is redundant. | | | | |

**Table 7.2.1-4: Overload Control Information within Create Session Request**

| Octet 1 | Overload Control Information IE Type = 180 (decimal) | | | |
|---|---|---|---|---|
| Octets 2 and 3 | Length = n | | | |
| Octet 4 | Spare and Instance fields | | | |
| **Information elements** | **P** | **Condition / Comment** | **IE Type** | **Ins.** |
| Overload Control Sequence Number | M | See clause 12.3.5.1.2.1 for the description and use of this parameter. | Sequence Number | 0 |
| Overload Reduction Metric | M | See clause 12.3.5.1.2.3 for the description and use of this parameter. | Metric | 0 |
| Period of Validity | M | See clause 12.3.5.1.2.2 for the description and use of this parameter. | EPC Timer | 0 |
| | | This IE should be set to "0" if the "Overload Reduction Metric" is null. This IE shall be ignored by the receiver if the "Overload Reduction Metric" is null. | | |

**Table 7.2.1-5: Remote UE Context Connected within Create Session Request**

| Octets 1 | Remot e UE Context IE Type = 191 (decimal) | | | |
|---|---|---|---|---|
| Octets 2 and 3 | Length = n | | | |
| Octets 4 | Spare and Instance fields | | | |
| **Information elements** | **P** | **Condition / Comment** | **IE Type** | **Ins.** |
| Remote User ID | M | See clause 8. parameter 123 for the description and use of this | Remote User ID | 0 |
| Remote UE IP Information | M | See clause 8. parameter 124 for the description and use of this | Remote UE IP Information | 0 |

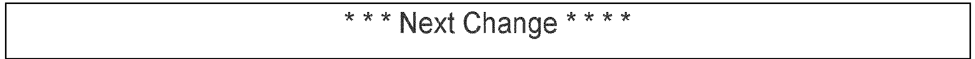

### 7.2.2 Create Session Response

The Create Session Response message shall be sent on the S11/S4 interfaces by the SGW to the MME/S4-SGSN, on the S5/S8 interfaces by the PGW to the SGW, on the S2b interface by the PGW to the ePDG, and on the S2a interface by the PGW to the TWAN as part of the procedures listed for the Create Session Request (see clause 7.2.1).

If handling of default bearer fails, then cause at the message level shall be a failure cause. Possible Cause values are specified in Table 8.4-1. Message specific cause values are:
- "Request accepted".
- "Request accepted partially".
- "New PDN type due to network preference".
- "New PDN type due to single address bearer only".
- "Missing or unknown APN".
- "GRE key not found".
- "Preferred PDN type not supported".
- "All dynamic addresses are occupied".
- "Remote peer not responding".
- "Semantic error in the TFT operation".
- "Syntactic error in the TFT operation".
- "Semantic errors in packet filter(s)".
- "Syntactic errors in packet filter(s)".
- "User authentication failed".
- "APN access denied - no subscription".
- "APN Restriction type incompatibility with currently active PDN Connection".
- "Version not supported by next peer".
- "Denied in RAT".
- "Protocol type not supported".
- "APN congestion".
- "Multiple PDN connections for a given APN not allowed".
- "Multiple accesses to a PDN connection not allowed".
- "Context not found".
- "UE not authorised by OCS or external AAA Server".

**Table 7.2.2-1: Information Elements in a Create Session Response**

| **Information elements** | **P** | **Condition / Comment** | | **IE Type** | **Ins.** |
|---|---|---|---|---|---|
| Cause | M | See NOTE 2 and NOTE 4. | | Cause | 0 |
| Change Reporting Action | C | This IE shall be included on the S5/S8 and S4/S11 interfaces with the appropriate Action field if the location Change Reporting mechanism is to be started or stopped for this subscriber in the SGSN/MME. | | Change Reporting Action | 0 |
| CSG Information Reporting Action | CO | This IE shall be included on the S5/S8 and S4/S11 interfaces with the appropriate Action field if the CSG Info reporting mechanism is to be started or stopped for this subscriber in the SGSN/MME. | | CSG Information Reporting Action | 0 |
| H(e)NB Information Reporting | CO | This IE shall be included on the S5/S8 and S4/S11 interfaces with the appropriate Action field if H(e)NB information reporting is to be started or stopped (during a TAU/RAU with SGW change if started earlier) for the PDN connection in the SGSN/MME. | | H(e)NB Information Reporting | 0 |
| Sender F-TEID for Control Plane | C | This IE shall be sent on the S11/S4 interfaces. For the S5/S8/ S2a/S2b interfaces it is not needed because its content would be identical to the IE PGW S5/S8/ S2a/S2b F-TEID for PMIP based interface or for GTP based Control Plane interface. | | F-TEID | 0 |
| PGW S5/S8/ S2a/S2b F-TEID for PMIP based interface or for GTP based Control Plane interface | C | The PGW shall include this IE on the S5/S8 interfaces during the Initial Attach, a Handover from Trusted or Untrusted Non-3GPP IP Access to E-UTRAN, UE requested PDN connectivity, PDP Context Activation and a Handover from Trusted or Untrusted Non-3GPP IP Access to UTRAN/GERAN procedures. | | F-TEID | 1 |
| | | If the SGW receives this IE it shall forward the IE to MME/S4-SGSN on the S11/S4 interface. This IE shall include the TEID for GTP based S5/S8 case and the uplink GRE key in the PMIP based S5/S8 case. | | | |
| | | For PMIP based S5/S8, this IE shall be included on the S11/S4 interface and shall contain the PGW S5/S8 IP address for control plane; the same IP address shall be used for both control plane and the user plane communication if the Bearer Context IE does not contain a S5/S8-U PGW F-TEID IE. See NOTE 7. | | | |
| | | The PGW shall include this IE on the S2b interface during the Attach with GTP on S2b, UE initiated Connectivity to Additional PDN with GTP on S2b, Handover to Untrusted Non-3GPP IP Access with GTP on S2b procedures and Initial Attach for emergency session (GTP on S2b). | | | |
| | | The PGW shall include this IE on the S2a interface during the Initial Attach in WLAN on GTP S2a, an Initial Attach in WLAN for Emergency Service on GTP S2a, UE initiated Connectivity to Additional PDN with GTP on S2a and Handover to TWAN with GTP on S2a procedures See NOTE 6. | | | |
| PDN Address Allocation (PAA) | C | This IE shall be included on the S5/S8, S4/S11 and S2a/S2b interfaces for the E-UTRAN initial attach, a Handover from Trusted or Untrusted Non-3GPP IP Access to E-UTRAN, PDP Context Activation, a Handover from Trusted or Untrusted Non-3GPP IP Access to UTRAN/GERAN, UE requested PDN connectivity, Attach with GTP on S2b, UE initiated Connectivity to Additional PDN with GTP on S2b, Handover to Untrusted Non-3GPP IP Access with GTP on S2b, Initial Attach for emergency session (GTP on S2b), Initial Attach in WLAN on GTP S2a, Initial Attach in WLAN for Emergency Service on GTP S2a, UE initiated Connectivity to Additional PDN with GTP on S2a and Handover to TWAN with GTP on S2a. | | PAA | 0 |
| | | The PDN type field in the PAA shall be set to IPv4, or IPv6 or IPv4v6, Non-IP or Ethernet by the PGW. See NOTE4. For the S4/S11 and S5/S8 interfaces, if the PGW uses DHCPv4 for IPv4 address allocation, the IPv4 address field shall be set to 0.0.0.0; otherwise, the IPv4 address field shall be set to non-zero value as specified in 3GPP TS 23.401 [3] and 3GPP TS 23.402 [45]. | | | |
| | | When assigning an IPv6 address the PGW shall send a non-zero interface Identifier. See NOTE 8. For Non-IP or Ethernet PDN connections, the PDN Address and Prefix field shall not be present. | | | |
| APN Restriction | C | This IE shall be included on the S5/S8 and S4/S11 interfaces in the E-UTRAN initial attach, a Handover from Trusted or Untrusted Non-3GPP IP Access to E-UTRAN, PDP Context Activation, a Handover from Trusted or Untrusted Non-3GPP IP Access to UTRAN/GERAN and UE Requested PDN connectivity procedures. This IE shall also be included on S4/S11 during the Gn/Gp SGSN to S4 SGSN/MME RAU/TAU procedures. This IE denotes the restriction on the combination of types of APN for the APN associated with this EPS bearer Context. | | APN Restriction | 0 |
| Aggregate Maximum Bit Rate (APN-AMBR) | C | This IE represents the APN-AMBR. It shall be included on the S5/S8, S4/S11 and S2a/S2b interfaces if the received APN-AMBR has been modified by the PCRF. | | AMBR | 0 |
| Linked EPS Bearer ID | C | This IE shall be sent on the S4/S11 interfaces during Gn/Gp SGSN to S4-SGSN/MME RAU/TAU procedure to identify the default bearer the PGW selects for the PDN Connection. | | EBI | 0 |
| Protocol Configuration Options (PCO) | C | If ePCO is not supported by the UE or the network, and if the PGW decides to return PCO to the UE during the Attach, PDN connectivity or Handover to 3GPP access procedures, PGW shall send PCO to SGW. If SGW receives the PCO IE, SGW shall forward it to MME/SGSN. | | PCO | 0 |
| | CO | For trusted WLAN access, if single-connection mode or multiple-connection mode is used, the PGW may include this IE over the S2a interface to send PCO to the UE. | | | |
| Bearer Contexts created | M | EPS bearers corresponding to Bearer Contexts sent in request message. Several lEs with the same type and instance value may be included on the S5/S8 and S4/S11 as necessary to represent a list of Bearers. One single IE shall be included on the S2a/S2b interface. | | Bearer Context | 0 |
| | | One bearer shall be included for E-UTRAN Initial Attach, a Handover from Trusted or Untrusted Non-3GPP IP Access to E-UTRAN, PDP Context Activation, a Handover from Trusted or Untrusted Non-3GPP IP Access to UTRAN/GERAN, UE Requested PDN Connectivity , Attach with GTP on S2b, UE initiated Connectivity to Additional PDN with GTP on S2b, Handover to Untrusted Non-3GPP IP Access with GTP on S2b, Initial Attach for emergency session (GTP on S2b), Initial Attach in WLAN on GTP S2a, an Initial Attach in WLAN for Emergency Service on GTP S2a, UE initiated Connectivity to Additional PDN with GTP on S2a and Handover to TWAN with GTP on S2a. | | | |
| | | One or more created bearers shall be included for a Handover/TAU/RAU with an SGW change. See NOTE 2. | | | |
| Bearer Contexts marked for removal | C | EPS bearers corresponding to Bearer Contexts to be removed that were sent in the Create Session Request message. | | Bearer Context | 1 |
| | | For each of those bearers an IE with the same type and instance value shall be included on the S4/S11 interfaces. | | | |
| Recovery | C | This IE shall be included on the S4/S11, S5/S8 and S2a/S2b interfaces if contacting the peer for the first time | | Recovery | 0 |
| Charging Gateway Name | C | When Charging Gateway Function (CGF) Address is configured, the PGW shall include this IE on the S5 interface. See NOTE 1. | | FQDN | 0 |
| Charging Gateway Address | C | When Charging Gateway Function (CGF) Address is configured, the PGW shall include this IE on the S5 interface. See NOTE 1. | | IP Address | 0 |
| PGW-FQ-CSID | C | This IE shall be included by the PGW on the S5/S8 and S2a/S2b interfaces and, when received from S5/S8 be forwarded by the SGW on the S11 interface according to the requirements in 3GPP TS 23.007 [17]. | | FQ-CSID | 0 |
| SGW-FQ-CSID | C | This IE shall be included by the SGW on the S11 interface according to the requirements in 3GPP TS 23.007 [17]. | | FQ-CSID | 1 |
| SGW LDN | O | This IE is optionally sent by the SGW to the MME/SGSN on the S11/S4 interfaces (see 3GPP TS 32.423 [44]), when communicating the LDN to the peer node for the first time. | | Local Distinguished Name (LDN) | 0 |
| PGW LDN | O | This IE is optionally included by the PGW on the S5/S8 and S2a/S2b interfaces (see 3GPP TS 32.423 [44]), when communicating the LDN to the peer node for the first time. | | Local Distinguished Name (LDN) | 1 |
| PGW Back-Off Time | O | This IE may be included on the S5/S8 and S4/S11 interfaces when the PDN GW rejects the Create Session Request with the cause "APN congestion". It indicates the time during which the MME or S4-SGSN should refrain from sending subsequent PDN connection establishment requests to the PGW for the congested APN for services other than Service Users/emergency services. See NOTE 3. | | EPC Timer | 0 |
| Additional Protocol Configuration Options (APCO) | CO | If multiple authentications are supported by the PGW and if PGW received the Additional Protocol Configuration Options IE in the Create Session Request, the PGW shall include this IE on the S2b interface and perform the corresponding procedures as specified for PAP and CHAP authentication of the UE with external networks in 3GPP TS 33.402 [50]. | | Additional Protocol Configuration Options (APCO) | 0 |
| | O | If the PGW supports the Additional Protocol Configuration Options IE and if the PGW has received the Additional Protocol Configuration Options IE with the "DNS IPv4/IPv6 Server Address Request" parameter in the Create Session Request over S2b interface, the PGW may include this IE over the S2b interface with the "DNS IPv4/IPv6 Server Address" parameter as specified in 3GPP TS 24.008 [5]. | | | |
| | | If the PGW supports the Additional Protocol Configuration Options IE and if the PGW has received the Additional Protocol Configuration Options IE with the P-CSCF IPv4 Address Request, or P-CSCF IPv6 Address Request or both parameters in the Create Session Request over the S2b interface, the PGW may include this IE over the S2b interface with the P-CSCF IPv4 Address, or P-CSCF IPv6 Address, or both parameters respectively as specified in 3GPP TS 24.008 [5]. | | | |
| | | If the PGW supports the Additional Protocol Configuration Options IE and if the PGW has received the Additional Protocol Configuration Options IE with a PDU session ID in the Create Session Request over the S2b interface, the PGW may include this IE over the S2b interface with the S-NSSAI as specified in 3GPP TS 24.302 [63] and 3GPP TS 24.008 [5]. | | | |
| | O | The PGW may include this IE on the S2a interface to provide the TWAN with additional IP configuration parameters (e.g. DNS server), if a corresponding request was received in the Create Session Request message. | | | |
| Trusted WLAN IPv4 Parameters | CO | The PGW shall include this IE on the S2a interface to a Trusted WLAN Access if PDN Type in the PAA is set to IPv4 or IPv4v6 and the transparent single-connection mode is used as specified in 3GPP TS 23.402 [45]. This IE shall include: | | IPv4 Configuration Parameters (IP4CP) | 0 |
| | | | - The Subnet Prefix Length of the subnet from which the PGW allocates the UE's IPv4 address. | | |
| | | | - The IPv4 Default Router Address which belongs to the same subnet as the IPv4 address allocated to the UE. | | |
| Indication Flags | CO | This IE shall be included if any one of the applicable flags is set to 1. Applicable flags are: | | Indication | 0 |
| | | | - PDN Pause Support Indication: this flag shall be set to 1 on the S5/S8 interface if the PGW supports the PGW Pause of Charging procedure. | | |
| | | | - PDN Pause Enable Indication: this flag shall be set to 1 on the S5/S8 interface if the PGW enables the SGWto use the PGW Pause of Charging procedure for this PDN connection. | | |
| | | | - Associate OCI with PGW node's identity: The PGW shall set this flag to 1 on the S5/S8 interface or S2a/S2b interface if it has included the "PGWs Overload Control Information" and if this information is to be associated with the node identity (i.e. FQDN or the IP address received from the HSS or DNS during the PGW selection) of the serving PGW. This flag shall be set to 1 by the PGW if the "PGWs Overload Control Information" is included and the Cause IE is set to a rejection cause code. The SGW shall set this flag on the S11/S4 interface if it supports the overload control feature and if the flag is set on the S5/S8 interface. | | |
| | | | - Associate OCI with SGW node's identity: The SGW shall set this flag to 1 on the S11/S4 interface if it has included the "SGWs Overload Control Information" and if this information is to be associated with the node identity (i.e. FQDN or the IP address received from the DNS during the SGW selection) of the serving SGW. This flag shall be set to 1 by the SGW if the "SGWs Overload Control Information" is included and the Cause IE is set to a rejection cause code. | | |
| | | | - Delay Tolerant Connection Indication: the flag shall be set to 1 on the S5/S8 and S11/S4 interface if the PDN connection is "Delay Tolerant" (see clause 8.12). | | |
| | | | - Triggering SGSN initiated PDP Context Creation/Modification Indication: this flag shall be set to 1 on the S5/S8 interfaces if the networkinitiated NBIFOM mode is used for this PDN connection. The SGW shall set this flag on the S4 interface if it supports the NBIFOM feature and the flag is set on the S5/S8 interface. | | |
| Presence Reporting Area Action | CO | This IE shall be included on the S5/S8 and S11/S4 interfaces with the appropriate Action field if reporting changes of UE presence in a Presence Routing Area is to be started, stopped or modified for this subscriber in the MME/SGSN. | | Presence Reporting Area Action | 0 |
| | | Several lEs with the same type and instance value may be included as necessary to represent a list of Presence Reporting Area Actions. One IE shall be included per PRA to be started, stopped or modified. | | | |
| PGWs node level Load Control Information | O | The PGW may include this IE on the S5/S8 or S2a/S2b interface, providing its node level load information, if the load control feature is supported by the PGW and is activated for the PLMN to which the access network node, i.e. MME/S4-SGSN for 3GPP access network, ePDG/TWAN for non-3GPP access network, belongs (see clause 12.2.6). | | Load Control Information | 0 |
| | CO | If the SGW receives this IE and if it supports the load control feature, it shall forward it to the MME/S4-SGSN on the S11/S4 interface. | | | |
| PGWs APN level Load Control Information | O | The PGW may include this IE on the S5/S8 or S2a/S2b interface, providing APN level load information, if the APN level load control feature is supported by the PGW and is activated for the PLMN to which the access network node, i.e. MME/S4-SGSN for 3GPP access network, ePDG/TWAN for non-3GPP access based network, belongs (see clause 12.2.6). | | Load Control Information | 1 |
| | | When present, the PGW shall provide one or more instances of this IE, up to maximum of 10, with the same type and instance value, each representing the load information for a list of APN(s). | | | |
| | | See NOTE 9, NOTE 11. | | | |
| | CO | If the SGW receives this IE and if it supports APN level load control feature, it shall forward it to the MME/S4-SGSN on the S11/S4 interface. | | | |
| SGWs node level Load Control Information | O | The SGW may include this IE, over the S11/S4 interface if the load control feature is supported by the SGW and is activated in the network (see clause 12.2.6). | | Load Control Information | 2 |
| | | When present, the SGW shall provide only one instance of this IE, representing its node level load information. | | | |
| PGWs Overload Control Information | O | During an overload condition, the PGW may include this IE on the S5/S8 or S2a/S2b interface, if the overload control feature is supported by the PGW and is activated for the PLMN to which the access network node, i.e. MME/S4-SGSN for 3GPP access based network, ePDG/TWAN for non-3GPP access based network, belongs (see clause 12.3.11). | | Overload Control Information | 0 |
| | | When present, the PGW shall provide: | | | |
| | | | - node level overload control, in one instance of this IE; and/or | | |
| | | | - APN level overload control , in one or more instances of this IE, up to maximum of 10, with the same type and instance value, each representing the overload information for a list of APN(s). | | |
| | | See NOTE 10, NOTE 12. | | | |
| | CO | If the SGW receives this IE and if it supports the overload control feature, it shall forward it to the MME/S4-SGSN on the S11/S4 interface. | | | |
| SGWs Overload Control Information | O | During an overload condition, the SGW may include this IE over the S11/S4 interface if the overload control feature is supported by the SGW and is activated in the network (see clause 12.3.11). | | Overload Control Information | 1 |
| | | When present, the SGW shall provide only one instance of this IE, representing its overload information. | | | |
| NBIFOM Container | CO | This IE shall be included on the S5/S8 or S2a/S2b interfaces if the PGW needs to send NBIFOM informationas specified in 3GPP TS 23.161 [71]. | | F-Container | 0 |
| | | The Container Type shall be set to 4. | | | |
| | CO | If the SGW receives an NBIFOM Container from the PGW, the SGW shall forward this IE to the MME/S4-SGSN on the S11/S4 interface. | | | |
| PDN Connection Charging ID | CO | The PGW shall include this IE on the S5/S8 or S2a/S2b interfaces, during an Initial Attach, Initial PDN connection establishment, or Addition of an access procedures, when using NBIFOM, as specified in 3GPP TS 23.161 [71]. | | Charging ID | 0 |
| Extended Protocol Configuration Options (ePCO) | CO | If the PGW decides to return ePCO to the UE during an Initial Attach, UE requested PDN Connectivity procedure, and if the PGW supports the ePCO and the EPCOSI flag is set to 1 in the Create Session Request message, the PGW shall send ePCO to the SGW. | | ePCO | 0 |
| | | If the SGW receives the ePCO IE, the SGW shall forward it to the MME. See NOTE 13. | | | |
| PGW node name | CO | This IE shall be included over S5/S8 and S2b interface by the PGW when it receives the corresponding Create Session Request message with the CSRMRI flag set to "1", and the creation of the PDN connection has been accepted. | | FQDN | 0 |
| | | If the SGW receives this IE, the SGW shall forward it to the MME over S11 interface. (See NOTE xx) | | | |
| Private Extension | O | This IE may be sent on the S5/S8, S4/S11 and S2a/S2b interfaces. | | Private Extension | VS |
| NOTE1: | Both Charging Gateway Name and Charging Gateway Address shall not be included at the same time. When both are available, the operator configures a preferred value. | | | | |
| NOTE2: | If the SGW cannot accept any of the "Bearer Context Created" IEs within Create Session Request message, the SGW shall send the Create Session Response with appropriate reject Cause value. | | | | |
| NOTE 3: | The last received value of the PGW Back-Off Time IE shall supersede any previous values received from that PGW and for this APN in the MME/SGSN. | | | | |
| NOTE4: | 3GPP TS 23.401 [3] (see clause 5.3.1.1) and 3GPP TS 23.060 [35] (see clause 9.2.1) specify the handling of the cases when UE has requested IPv4v6 PDN Type, but PGW restricts the usage of IPv4v6 PDN Type. | | | | |
| NOTE 5: | The conditions of presence of the lEs in the Create Session Response for the MME and S4-SGSN triggered Serving GW relocation (see clause 5.10.4 of 3GPP TS 23.401 [3] and clause 9.2.2.4 of 3GPP TS 23.060 [35]) are identical to those specified respectively for X2 handover with SGW relocation and for Enhanced Serving RNS Relocation with SGW relocation. | | | | |
| NOTE 6: | The IP address and TEID/GRE key in "PGW S5/S8/ S2a/S2b F-TEID for PMIP based interface or for GTP based Control Plane interface" IE are only provided for the subsequent GTP-C initial messages related to this PDN connection and shall NOT be used for other PDN connections. | | | | |
| NOTE 7: | For PMIP based S5/S8, the 'S5/S8-U PGW F-TEID' IE and the 'PGW S5/S8/ S2a/S2b F-TEID for PMIP based interface or for GTP based Control Plane interface' IE shall contain the same uplink GRE key; the interface Type in these lEs shall be set to the value 9 (S5/S8 PGW PMIPv6 interface). | | | | |
| NOTE 8: | The interface Identifier value of zero is a reserved value (see IETF RFC 5453 [58]). Clause 5.3.1.2.2 of 3GPP TS 23.401 [3] specifies the mechanism for preventing UE's link-local address collision with the PGWs link-local address. | | | | |
| NOTE 9: | The receiver, not supporting the APN level load control feature, shall ignore all the occurrence(s) of this IE, i.e. "Load Control Information" IE with instance number "1". The receiver, supporting the APN level load control feature and supporting the APN level load information for the maximum of 10 APNs, shall handle the APN level load information for the first 10 APNs and ignore any more APN level load information. | | | | |
| NOTE 10: | The receiver, supporting the APN level overload information for the maximum of 10 APNs, shall handle the APN level overload information for the first 10 APNs and ignore any more APN level overload information. | | | | |
| NOTE 11: | The APN level load information, provided within and across different instances of the "PGWs APN level Load Control Information" IE(s) shall be limited to 10 different APNs. | | | | |
| NOTE 12: | The APN level overload information, provided within and across different instances of the "PGWs Overload Control Information" IE(s) shall be limited to 10 different APNs. | | | | |
| NOTE 13: | The MME shall consider the presence of the ePCO IE in the Create Session Response message as an indication that the PGW and the SGW support the ePCO. The UE considers that the PGW supports ePCO when it receives an ePCO from the PGW. | | | | |
| NOTE xx: | The MME shall update the PGW FQDN associated with this PDN connection using this IE. | | | | |

**Table 7.2.2-2: Bearer Context Created within Create Session Response**

| Octets 1 ; | | Bearer Context IE Type = 93 (decimal) | | | |
|---|---|---|---|---|---|
| Octets 2 and 3 | | Length = n | | | |
| Octets 4 | | Spare and Instance fields | | | |
| **Information elements** | **P** | **Condition / Comment** | | **IE Type** | **Ins.** |
| EPS Bearer ID | M | | | EBI | 0 |
| Cause | M | This IE shall indicate if the bearer handling was successful, and if not, it gives information on the reason. (NOTE 1, NOTE 2, NOTE 3) | | Cause | 0 |
| S1-U SGW F-TEID | C | This IE shall be included on the S11 interface if the S1-U interface is used, i.e. if the S11-U Tunnel flag was not set in the Create Session Request. . See NOTE 6. | | F-TEID | 0 |
| S4-U SGW F-TEID | C | This IE shall be included on the S4 interface if the S4-U interface is used. | | F-TEID | 1 |
| S5/S8-U PGW F-TEID | C | For GTP-based S5/S8, this User Plane IE shall be included on S4/S11 and S5/S8 interfaces during the "E-UTRAN Initial Attach", a Handover from Trusted or Untrusted Non-3GPP IP Access to E-UTRAN, a "PDP Context Activation", a Handover from Trusted or Untrusted Non-3GPP IP Access to UTRAN/GERAN or a "UE Requested PDN Connectivity". | | F-TEID | 2 |
| | | For PMIP-based S5/S8, this IE shall be included on the S4/S11 interface during the "E-UTRAN Initial Attach", a Handover from Trusted or Untrusted Non-3GPP IP Access to E-UTRAN, a "PDP Context Activation", a Handover from Trusted or Untrusted Non-3GPP IP Access to UTRAN/GERAN or a "UE Requested PDN Connectivity" if the PGW provided an alternate address for user plane, i.e. an IP address for user plane which is different from the IP address for control plane. | | | |
| | | When present, this IE shall contain the alternate IP address for user plane and the uplink GRE key. See NOTE 4 and NOTE 5. | | | |
| S12 SGW F-TEID | C | This IE shall be included on the S4 interface if the S12 interface is used. | | F-TEID | 3 |
| S2b-U PGW F-TEID | C | This IE (for user plane) shall be included on the S2b interface during the Attach with GTP on S2b, UE initiated Connectivity to Additional PDN with GTP on S2b, Handover to Untrusted Non-3GPP IP Access with GTP on S2b, and Initial Attach for emergency session (GTP on S2b). | | F-TEID | 4 |
| S2a-U PGW F-TEID | C | This IE (for user plane) shall be included on the S2a interface during the Initial Attach in WLAN on GTP S2a, an Initial Attach in WLAN for Emergency Service on GTP S2a, UE initiated Connectivity to Additional PDN with GTP on S2a, and Handover to TWAN with GTP on S2a. | | F-TEID | 5 |
| Bearer Level QoS | C | This IE shall be included on the S5/S8, S4/S11 and S2a/S2b interfaces if the received QoS parameters have been modified. | | Bearer QoS | 0 |
| | C | This IE shall be included on the S5/S8 interface for an E-UTRAN initial attach, a Handover from Trusted or Untrusted Non-3GPP IP Access to E-UTRAN, a PDP Context Activation, a Handover from Trusted or Untrusted Non-3GPP IP Access to UTRAN/GERAN and a UE requested PDN connectivity. | | Charging Id | 0 |
| Charging Id | O | If the S5/S8 interface is GTP, this IE may be included on the S4 interface, in order to support CAMEL charging at the SGSN, for a PDP Context Activation, a Handover from Trusted or Untrusted Non-3GPP IP Access to UTRAN/GERAN, inter S4-SGSN RAU with SGW change and Gn/Gp to S4-SGSN RAU. | | | |
| | CO | This IE shall be included on the S2a/S2b interface for an Initial Attach in WLAN on GTP S2a, an Initial Attach in WLAN for Emergency Service on GTP S2a, Attach with GTP on S2b, UE initiated Connectivity to Additional PDN with GTP on S2b, Handover to Untrusted Non-3GPP IP Access with GTP on S2b, Initial Attach for emergency session (GTP on S2b, UE initiated Connectivity to Additional PDN with GTP on S2a, and Handover to TWAN with GTP on S2a. | | | |
| Bearer Flags | O | Applicable flags are: | | Bearer Flags | 0 |
| | | | - PPC (Prohibit Payload Compression) : this flag may be set on the S5/S8 and S4 interfaces. | | |
| S11-U SGW F-TEID | C | This IE shall be included on the S11 interface if the S11-U interface is used, i.e. if the S11-U Tunnel flag was set in the Create Session Request. | | F-TEID | 6 |
| | | If the SGW supports both IP address types, the SGW shall send both IP addresses within the F-TEID IE. If only one IP address is included, then the MME shall assume that the SGW does not support the other IP address type. | | | |
| NOTE 1: | According to 3GPP TS 23.401 [3] e.g. clause 5.5.1.2.2 "S1-based handover, normal" and 3GPP TS 23.060 [35], during the handover procedure with an SGW change, except in the case of X2-handover (NOTE2 addresses X2 based HO with SGW change case), the target MME/S4-SGSN initiates the Create Session Request/Response and Modify Bearer Request/Response procedures one after the other. After receiving the "Bearer Context to be Created" IEs within Create Session Request message, the SGW may not accept some of these bearers. The SGW however shall return all bearers with the "Bearer Context Created" IEs within Create Session Response message (this table), but with different Cause values. Bearers that were not accepted by the SGW shall have an appropriate rejection value in the Cause IE. The target MME/S4-SGSN shall send these non-accepted bearers to the target SGW within the "Bearer Context to be removed" IE in a subsequent Modify Bearer Request message. Therefore, the SGW shall allocate the DL S5/S8 SGW F-TEIDs also for the non-accepted bearers. MME/S4-SGSN should remove all of the non-accepted bearers by separate procedures (e.g. an MME/S4-SGSN initiated Dedicated Bearer Deactivation procedure). | | | | |
| NOTE 2: | According to 3GPP TS 23.401 [3] clause 5.5.1.1.3, "X2-based handover with Serving GW relocation", and 3GPP TS 23.060 [35] clause 6.9.2.2.5A "Enhanced Serving RNS Relocation Procedure using S4", during the X2-handover procedure with an SGW change and Enhanced Serving RNS Relocation Procedure with an SGW change, the target MME/S4-SGSN shall initiate only the Create Session Request/Response procedure. The SGW shall return all bearers (including those not accepted by the SGW) with a "Bearer Context Created" IE within Create Session Response message (this table), but with different Cause values. Bearers that were not accepted by the SGW shall have an appropriate rejection value in the Cause IE, The MME/S4-SGSN should remove these non-accepted bearers by separate procedures as well. | | | | |
| NOTE 3: | According to 3GPP TS 23.401 [3] e.g. clause 5.3.3.1 "Tracking Area Update procedure with Serving GW change" and 3GPP TS 23.060 [35], during the RAU/TAU procedure with an SGW change, the target MME/S4-SGSN shall initiate only the Create Session Request/Response procedure. The SGW shall return all bearers (including those not accepted by the SGW) with a "Bearer Context Created" IE within Create Session Response message (this table), but with different Cause values. Bearers that were not accepted by the SGW shall have an appropriate rejection value in the Cause IE. When Active Flag or Follow-on request is set during TAU/RAU procedure, MME/S4-SGSN should not establish user plane tunnel over S1 or lu for those bearer contexts which were not accepted by the target SGW, while in the corresponding Modify Bearer Request message, the MME/S4-SGSN shall include all accepted bearer contexts in the "Bearer Context to be modified" IE and include all non-accepted bearer contexts in the "Bearer Context to be removed" IE. The MME/S4-SGSN should remove the bearers non-accepted by either SGW or eNB/RNC by separate procedures as well. | | | | |
| NOTE 4: | The capability to receive from the LMA an alternate LMA address for user plane shall be supported homogeneously across all the SGWs, when supported over PMIP-based S5/S8. | | | | |
| NOTE 5: | For PMIP based S5/S8, the 'S5/S8-U PGW F-TEID' IE and the 'PGW S5/S8/ S2a/S2b F-TEID for PMIP based interface or for GTP based Control Plane interface' IE shall contain the same uplink GRE key; the interface Type in these lEs shall be set to the value 9 (S5/S8 PGW PMIPv6 interface). | | | | |
| NOTE 6: | When Control Plane CloT EPS Optimization is supported, the IP address spaces for S1-U and S11-U may be different, based on operator's deployment. If so, the following requirements shall apply: | | | | |
| | 1) if the CPOPCI (Control Plane Only PDN Connection Indication) flag is not set in the Create Session Request message, the SGW shall include both the S11-U SGW F-TEID and S1-U SGW F-TEID in the Create Session Response message, regardless of whether the S11-U Tunnel flag is set in the Create Request Request. | | | | |
| | 2) all the MMEs in the PLMN shall support receiving both the S11-U SGW F-TEID and S1-U SGW F-TEID in the Create Session Response response; the MME shall use them according to whetherthe CloT Control Plane Optimization is used. | | | | |

**Table 7.2.2-3: Bearer Context marked for removal within a Create Session Response**

| Octet 1 | Bearer Context IE Type = 93 (decimal) | | | |
|---|---|---|---|---|
| Octets 2 and 3 | Length = n | | | |
| Octet 4 | Spare and Instance fields | | | |
| **Information elements** | **P** | **Condition / Comment** | **IE Type** | **Ins.** |
| EPS Bearer ID | M | | EBI | 0 |
| Cause | M | This IE shall indicate if the bearer handling was successful, and if not, gives the information on the reason. | Cause | 0 |

**Table 7.2.2-4: Load Control Information within Create Session Response**

| Octet 1 | Load Control Information IE Type = 181 (decimal) | | | |
|---|---|---|---|---|
| Octets 2 and 3 | Length = n | | | |
| Octet 4 | Spare and Instance fields | | | |
| **Information elements** | **P** | **Condition** / **Comment** | **IE Type** | **Ins.** |
| Load Control Sequence Number | M | See clause 12.2.5.1.2.1 for the description and use of this parameter. | Sequence Number | 0 |
| Load Metric | M | See clauses 12.2.5.1.2.2 and 12.2.5.1.2.3 for the description and use of this parameter. | Metric | 0 |
| List of APN and Relative Capacity | CO | The IE shall (only) be present in the "PGWs APN level Load Control Information" IE. | APN and Relative Capacity | 0 |
| | | For indicating the APN level load, the PGW shall include one or more instances of this IE, up to maximum of 10, with the same type and instance value, representing a list of APN(s) & its respective "Relative Capacity" (sharing the same "Load Metric"). | | |
| | | See clause 12.2.5.1.2.3 for the description and use of this parameter. | | |
| | | See NOTE 1. | | |
| NOTE 1: If more than 10 occurrences of "APN and Relative Capacity" IE are received within one instance of the Load Control Information IE, the receiver shall treat it as a protocol error and ignore the entire Load Control Information IE instance. | | | | |

**Table 7.2.2-5: Overload Control Information within Create Session Response**

| Octet 1 | Overload Control Information IE Type = 180 (decimal) | | | |
|---|---|---|---|---|
| Octets 2 and 3 | Length = n | | | |
| Octet 4 | Spare and Instance fields | | | |
| **Information elements** | **P** | **Condition / Comment** | **IE Type** | **Ins.** |
| Overload Control Sequence Number | M | See clause 12.3.5.1.2.1 for the description and use of this parameter. | Sequence Number | 0 |
| Overload Reduction Metric | M | See clauses 12.3.5.1.2.3 and 12.3.5.1.2.4 forthe description and use of this parameter. | Metric | 0 |
| Period of Validity | M | See clause 12.3.5.1.2.2 for the description and use of this parameter. | EPC Timer | 0 |
| | | This IE should be set to "0" if the "Overload Reduction Metric" is null. This IE shall be ignored by the receiver if the "Overload Reduction Metric" is null. | | |
| List of Access Point Name (APN) | CO | The IE may (only) be present in the "PGWs Overload Control Information" IE. | APN | 0 |
| | | For indicating the APN level overload, the PGW shall include one or more instances of this IE, up to maximum of 10, with the same type and instance value, representing a list of APN(s) (sharing the same "Overload Reduction Metric" and "Period of Validity"). See NOTE 1. | | |
| NOTE 1: If more than 10 occurrences of APNs are received within one instance of the Overload Control Information IE, the receiver shall treat it as a protocol error and ignore the entire Overload Control Information IE instance. | | | | |

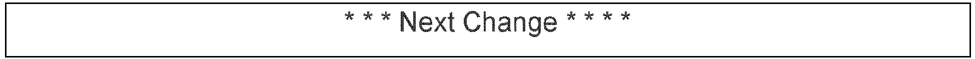

### 8.12 Indication

Indication is coded as depicted in Figure 8.12-1.

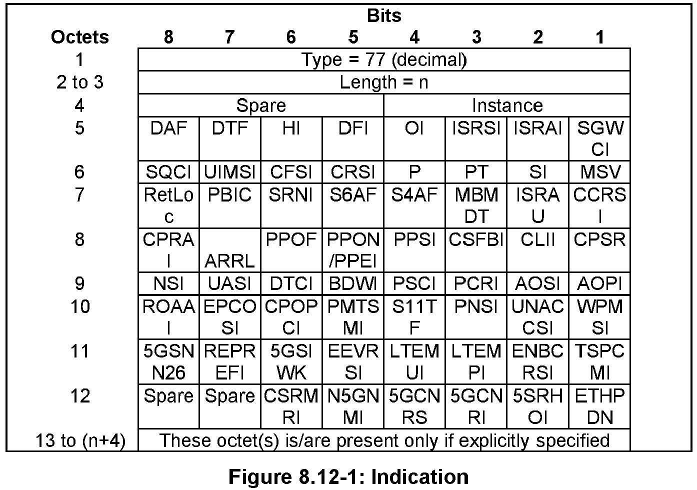

For each message the applicable flags of the Indication IE shall be clearly specified in the individual message sub clause. The remaining flags of the Indication IE not so indicated shall be discarded by the receiver.

The receiver shall consider the value of the applicable flags as "0", if the Indication IE is applicable for the message but not included in the message by the sender.

The following bits within Octet 5 shall indicate:
- Bit 8 - DAF (Dual Address Bearer Flag): This bit shall be set when the PDN Type, determined based on UE request and subscription record, is set to IPv4v6 and all SGSNs which the UE may be handed over to are Release 8 or above supporting dual addressing, which is determined based on node pre-configuration by the operator..
- Bit 7 - DTF (Direct Tunnel Flag): This bit shall be set when the UE is in UTRAN and Direct Tunnel is selected
- Bit 6 - HI (Handover Indication): If this bit is set to 1 over S11/S4 and S5/S8 interfaces, it shall indicate a UE handover attach. This bit is applicable during the Handover from Trusted or Untrusted Non-3GPP IP Access to E-UTRAN or a Handover from Trusted or Untrusted Non-3GPP IP Access to UTRAN/GERAN procedures (see clauses 8.2, 8.6 and 16.11 of 3GPP TS 23.402 [45]), or a 5GS to EPS handover without the N26 interface (see clause 4.11.2.2 of 3GPP TS 23.502 [83]). If this bit is set to 1 over GTP based S2a interface, it shall indicate a UE handover from 3GPP access to Trusted Non-3GPP access and UE requested IP address preservation. If this bit is set to 1 over GTP based S2b interface, it shall indicate a UE handover from 3GPP access to Untrusted Non-3GPP Access and UE requested IP address preservation.
- Bit 5 - DFI (Direct Forwarding Indication): If this bit is set to 1, it shall indicate that the direct forwarding between the source eNodeB and the target eNodeB during the S1 based handover procedure is applied.
- Bit 4 - OI (Operation Indication):
   - If this bit is set to 1, it shall denote that the receiving SGW of a "Create Session Request" shall send a Modify Bearer Request immediately to the PGW. This allows the SGW to differentiate if the "Create Session Request" received on S4/S11 interface belongs to a TAU/RAU with an SGW relocation (OI = 1), or X2-based handover with SGW relocation (OI = 1) or Enhanced SRNS Relocation with SGW relocation (OI=1) or MME triggered Serving GW relocation (OI = 1) or S1-based handover with SGW relocation (OI = 0).
   - It shall be set to 1 on S4/S 11 interface if the SGW needs to forward the Delete Session Request message to PGW.
- Bit 3 - ISRSI (Idle mode Signalling Reduction Supported Indication): If this is set to 1, it shall indicate that the old/source SGSN/MME and the associated SGW are capable to activate ISR.
- Bit 2 - ISRAI (Idle mode Signalling Reduction Activation Indication): If this bit is set to 1, it shall indicate that the ISR is established between the MME and the S4 SGSN during a TAU/RAU without an SGW change procedure or during an Inter RAT handover without an SGW change procedure. The SGW shall retain the resources for the other CN node that has its bearer resources on the SGW reserved. The old/source SGSN/MME shall maintain the UE's contexts and activate ISR.
- Bit 1 - SGWCI (SGW Change Indication):
   - If this bit is set to 1, it shall indicate that the target MME/SGSN has selected a new SGW during a TAU/RAU or handover with an SGW change procedure.
   - It shall be set to 1 by the target AMF during the EPS to 5GS handover/Idle mode Mobility using N26 interface.

The following bits within Octet 6 shall indicate:
- Bit 8 - SQCI (Subscribed QoS Change Indication): If this bit is set to 1, it indicates that the subscribed QoS profile of the related PDN connection has changed in the old MME/SGSN when the UE is in ECM-IDLE state and ISR is activated. The new MME/SGSN shall trigger the Subscribed QoS Modification procedure. See 3GPP TS 23.401 [3], clause 5.3.9.2.
- Bit 7 - UIMSI (Unauthenticated IMSI): If this bit is set to 1, it indicates that the IMSI present in the message is not authenticated and is for emergency or RLOS attached UE.
- Bit 6 - CFSI (Change F-TEID support indication): if this bit is set to 1, it indicates that the SGW can change the assigned GTP-U F-TEID in the current procedure. If the SGW needs to modify the GTP-U F-TEID and the CFSI flag is set to 1 in the corresponding request message, the SGW shall include the new F-TEID in the Modify Bearer Response/Modify Access Bearers Response message.
- Bit 5 - CRSI (Change Reporting support indication): if this bit is set to 1, it indicates that the MME/S4 SGSN supports Location Change Reporting mechanism for the corresponding session.
- Bit 4 - PS (Piggybacking Supported). This bit denotes whether the MME/SGW support piggybacking feature as described in Annex F of 3GPP TS 23.401 [3]. If set to 1, it indicates that the node is capable of processing two different GTP-C messages appearing back to back in a single UDP payload.
- Bit 3 - PT (S5/S8 Protocol Type) If this bit set to 1, it shall indicate that the protocol type for the S5/S8 interface is PMIP; this bit is set to 0 to indicate that the protocol type for the S5/S8 interface is GTP.
- Bit 2 - SI (Scope Indication): If this bit is set to 1, it indicates that all bearer resources of the UE shall be released by the SGW. This flag is set in messages during TAU/RAU/Handover with SGW change /SRNS Relocation Cancel Using S4 with SGW change/Inter RAT handover Cancel procedure with SGW change/S 1 Based handover Cancel procedure with SGW change.
- Bit 1 - MSV (MS Validated): If this bit is set to 1, it shall indicate that the new MME/SGSN has successfully authenticated the UE.

The following bits within Octet 7shall indicate:
- Bit 8 - RetLoc (Retrieve Location Indication Flag): if this bit is set to 1, it indicates that the PGW requests the MME/SGSN or TWAN/ePDG to provide the User Location Information.
   Bit 7 - PBIC (Propagate BBAI Information Change): if this bit is set to 1, it indicates a change in the H(e)NB local IP address and/or UDP port number, i.e. the UE moves from an (e)NB to a H(e)NB, or from one H(e)NB to another H(e)NB with the fixed network backhaul changed, or the UE moves from a H(e)NB to a (e)NB.
- Bit 6 - SRNI (SGW Restoration Needed Indication): if this bit is set to 1, it indicates that the source MME/S4-SGSN has not performed the SGW relocation procedure after the source SGW has failed with or without restart, when the source and target MME/S4-SGSN support the MME/S4-SGSN triggered SGW restoration procedure as specified in 3GPP TS 23.007 [17].
- Bit 5 - S6AF (Static IPv6 Address Flag): if this bit is set to 1, it indicates that PDP/PDN IPv6 address is static.
- Bit 4 - S4AF (Static IPv4 Address Flag): if this bit is set to 1, it indicates that PDP/PDN IPv4 address is static.
- Bit 3 - MBMDT (Management Based MDT allowed flag): if this bit is set to 1, it indicates that management based MDT is allowed.
- Bit 2 - ISRAU (ISR is activated for the UE): if this bit is set to 1, it indicates that ISR is activated for the UE before the UE moving to the new SGSN/MME.
- Bit 1 - CCRSI (CSG Change Reporting support indication): if this bit is set to 1, it indicates that the MME/S4 SGSN supports CSG Information Change Reporting mechanism for the corresponding session.

The following bits within Octet 8 shall indicate:
- Bit 8 - CPRAI (Change of Presence Reporting Area information Indication): when ISR is active if this bit is set to 1, it indicates that the Presence Reporting Area information, which is provided as a part of the Presence Reporting Area Information IE, has changed since last reported by the MME/S4-SGSN. The SGW shall ignore this flag when ISR is not active.
- Bit 7 - ARRL (Abnormal Release of Radio Link): if this bit is set to 1 by the MME, it indicates to the SGW that the access bearers are released due to an abnormal release of the radio link. Based on operator policy, this indication may be used by the SGW in subsequent decisions to trigger PDN charging pause if the PGW Pause of Charging feature has been enabled on that PDN connection.
- Bit 6 - PPOFF (PDN Pause Off Indication): if this bit is set to 1 by the SGW, it indicates to the PGW that the charging for the PDN connection shall be unpaused.
- Bit 5 - PPON (PDN Pause On Indication) / PPEI (PDN Pause Enabled Indication): if this bit is set to 1 by the SGW, it indicates to the PGW that the charging for the PDN connection shall be paused; if it is set to 1 by the PGW, it indicates that PGW enables the SGW to use the PGW Pause of Charging procedure for the PDN connection.
- Bit 4 - PPSI (PDN Pause Support Indication): if this bit is set to 1 by the SGW, it indicates that the SGW supports the PGW Pause of Charging procedure; if it is set to 1 by the PGW, it indicates that the PGW supports the PGW Pause of Charging procedure.
- Bit 3 - CSFBI (CSFB Indication): if this bit is set to 1, it indicates that the UE has been subject to CSFB.
- Bit 2 - CLII (Change of Location Information Indication): when ISR is active if this bit is set to 1, it indicates that the location information, which is provided as a part of ULI IE, has changed since last reported by the MME/S4-SGSN. The SGW shall ignore this flag when ISR is not active.
- Bit 1 - CPSR (CS to PS SRVCC indication): if this bit is set to 1, it indicates that a UTRAN/GERAN to E-UTRAN/UTRAN (HSPA) SRVCC procedure is underway and the associated message, i.e. Modify Bearer Request shall be forwarded to the PGW from the SGW as specified in 3GPP TS 23.216 [43].

The following bits within Octet 9 shall indicate:
- Bit 8 - NSI (NBIFOM Support Indication): if this bit is set to 1, it indicates to the PGW that the NBIFOM is supported (see clause 5.10 of 3GPP TS 23.161 [71]).
- Bit 7 - UASI (UE Available for Signaling Indication): if this bit is set to 1, it indicates that the UE is available for end to end signalling and that the PGW should re-attempt the pending network initiated procedure.
- Bit 6 - DTCI (Delay Tolerant Connection Indication): if this bit is set to 1, it indicates that the PDN connection is delay tolerant according to the local policies in the PGW, e.g. per APN.For this PDN connection the PGW supports receiving the rejection cause "UE is temporarily not reachable due to power saving" from the MME/SGSN via the SGW during a network initiated procedure and holding the network initiated procedure, until the PGW receives the subsequent Modify Bearer Request message with the UASI flag indicating that the UE is available for end to end signalling.
   Bit 5 - BDWI (Buffered DL Data Waiting Indication): if this bit is set to 1, it indicates that there is DL data buffered in the (old) SGW, i.e. that the new MME/SGSN shall invoke data forwarding if there is an SGW change as specified in clause 5.3.3.1A of 3GPP TS 23.401 [3], and that it shall setup the user plane in conjunction with the TAU/RAU procedure for delivery of the buffered DL data to the UE.
- Bit 4 - PSCI (Pending Subscription Change Indication): If this bit is set to 1, it indicates that there is a pending report of the changed subscribed QoS profile of the related PDN connection in the old MME, so that the new MME/SGSN shall trigger the HSS Initiated Subscribed QoS Modification procedure towards the PGW. See clause 5.3.9.2 of 3GPP TS 23.401 [3].
- Bit 3 - PCRI (P-CSCF Restoration Indication): if this bit is set to 1, it indicates a request to trigger a P-CSCF restoration for the corresponding user (see 3GPP TS 23.380 [61]).
- Bit 2 - AOSI (Associate OCI with SGW node's Identity): if this bit is set to 1, it indicates that the SGW provided "SGW's Overload Control Information" which shall be associated with the node identity (i.e. FQDN or the IP address received from the DNS during the SGW selection) of the serving SGW.
- Bit 1 - AOPI (Associate OCI with PGW node's Identity): if this bit is set to 1, it indicates that the PGW provided "PGW's Overload Control Information" which shall be associated with the node identity (i.e. FQDN or the IP address received from the HSS or DNS during the PGW selection) of the serving PGW.

The following bits within Octet 10 shall indicate:
- Bit 8 - ROAAI (Release Over Any Access Indication): If this bit is set to 1, it indicates to the PGW that, if this is an NB-IFOM PDN connection, the PGW shall initiate the release of the corresponding PDN connection over the non-3GPP access over the S2a/S2b interface with the cause "Local release".
- Bit 7 - EPCOSI (Extended PCO Support Indication): If this bit is set to 1, it indicates to the receiver that the Extended PCO is supported, e.g. when the PGW is the receiver, it indicates that the UE, the MME and the SGW support Extended PCO; when the target MME is the receiver, during an inter-MME mobility, it indicates that UE and the source MME support Extended PCO.
- Bit 6 - CPOPCI (Control Plane Only PDN Connection Indication): If this bit is set to 1, it indicates that the PDN Connection is set to Control Plane Only, i.e. the user data pertaining to this PDN connection can only be transferred in NAS PDUs via the control plane.
- Bit 5 - PMTSMI (Pending MT Short Message Indication): If this bit is set to 1, it indicates to the target MME/S4-SGSN that there is one (or more) pending MT Short Message(s) in the SMS-GMSC, i.e. that the target MME/S4-SGSN shall provide its E. 164 address and Diameter Identity if available to receive the MT Short message and maintain the signalling connection with the UE for a longer time to enable the retransmission of the Short Message.
- Bit 4 - S11-U Tunnel Flag (S11TF): This flag shall be set to 1 on the S11 interface if user data is transported in NAS signalling.
- Bit 3 - PNSI (Pending Network Initiated PDN Connection Signalling Indication): if this bit is set to 1, it indicates to the target MME/SGSN that there is pending network initiated PDN connection signalling for the PDN connection, i.e. the target MME/SGSN shall set UASI flag in the Create Session Request or Modify Bearer Request message to indicate to the PGW that the UE is available for end to end signalling.
- Bit 2 - UNACCSI (UE Not Authorised Cause Code Support Indication): If this bit is set to 1, it indicates that the Cause Code for "UE not authorized by OCS or external AAA Server" is supported by the S4-SGSN/MME.
- Bit 1 - WLCP PDN Connection Modification Support Indication (WPMSI): if this bit is set to 1, it indicates that the TWAN supports the WLCP PDN Connection Modification procedure. This indication is used by the P-CSCF restoration extension procedure for TWAN access (see 3GPP TS 23.380 [61]).

The following bits within Octet 11 shall indicate:
- Bit 8 - 5GSNN26 (5GS Interworking without N26 Indication): if this bit is set to 1 and the 5GS Interworking Indication (5GSIWKI) is set to 1, it indicates to the PGW-C+SMF that 5GS Interworking is supported without the N26 interface. If this bit is set to 0 and the 5GSIWKI (5GS Interworking Indication) is set to 1, it indicates to the PGW-C+SMF that 5GS Interworking is supported with the N26 interface.
- Bit 7 - REPREFI (Return Preferred Indication): This flag shall be set to 1 to indicate a preferred return of the UE to the last used EPS or 5GS PLMN at a later access change to an EPS or 5GS shared network.
- Bit 6 -5GSIWKI (5GS Interworking Indication): This flag shall be set to 1 for UEs supporting N1 mode and not restricted from interworking with 5GS by user subscription (see "5GC" bit within Core-Network-Restrictions AVP and Interworking-5GS-Indicator AVP specified in 3GPP TS 29.272 [70] and 3GPP TS 29.273 [68]) and hence access to 5GC is allowed for the PDN connection.
- Bit 5 -EEVRSI (Extended EBI Value Range Support Indication): if this bit is set to 1, it indicates that the sending GTPv2 entity supports the 15 EPS Bearers, i.e. it supports to use EPS Bearer ID with a value between '1' and '15'.
- Bit 4 -LTEMUI (LTE-M UE Indication): if this bit is set to 1, it indicates that the UE is a LTE-M UE (see 3GPP TS 23.401 [3]);
- Bit 3 - LTEMPI (LTE-M RAT Type reporting to PGW Indication): if this bit is set to 1, it indicates to the SGW to forward the LTE-M RAT type to the PGW;
- Bit 2 - ENBCRSI (eNB Change Reporting Support Indication): if this bit is set to 1, it indicates that the MME supports Macro eNodeB Change Reporting mechanism for the corresponding session.
- Bit 1 -TSPCMI (Triggering SGSN initiated PDP Context Creation/Modification Indication): if this bit is set to 1, it indicates to the S4-SGSN that in the UE_initiated PDP Context Modification procedure, when the NBIFOM container is included, the S4-SGSN accepts the UE initiated PDP Context Modification procedure and initiates SGSN initiated PDP Context Creation/modification procedures respectively towards UE to transfer the NBIFOM container received from the PGW either in Create Bearer Request or Update Bearer Request message as specified in 3GPP TS 23.161 [71].

The following bits within Octet 12 shall indicate:
- Bit 8 to 6: Spare, for future use and set to 0.
- Bit 6 - CSRMRI (Create Session Request Message Redirected Indication): if this bit is set to 1, it indicates that the Create Session Request message has been redirected by a PGW, and the PGW shall include its PGW FQDN in the Create Session Response message if the creation of the PDN connection is accepted.
- Bit 5 - N5GNMI (No 5GS N26 Mobility Indication): if this bit is set to 1, it indicates that the PDN connection cannot be moved to 5GS via N26.
- Bit 4 -5GCNRS (5GC Not Restricted Support): if this bit is set to 1, this indicates to the PGW-C+SMF that the sending node (i.e. MME or ePDG) supports setting the SGCNRI flag. An MME or an ePDG compliant with this version of the specification shall support setting the SGCNRI flag.
- Bit 3 -5GCNRI (5GC Not Restricted Indication): if this bit is set to 1, this indicates to the PGW-C+SMF that access to the 5GC is not restricted for the PDN connection. If the 5GCNRS bit is set to 1 and the SGCNRI bit is set to 0, this indicates that access to the 5GC is restricted for the PDN connection. The 5GCNRI flag shall be ignored by the PGW-C+SMF if the 5GSIWKI flag is set to 1 (i.e. 5GS Interworking is supported).
- Bit 2 - 5SRHOI (5G-SRVCC HO Indication): if this bit is set to 1, it indicates the HO is used for 5G-SRVCC as specified in 3GPP TS 23.216 [43].- Bit 1 - ETHPDN (Ethernet PDN Support Indication): if this bit is set to 1, it indicates the support of Ethernet PDN Connection.

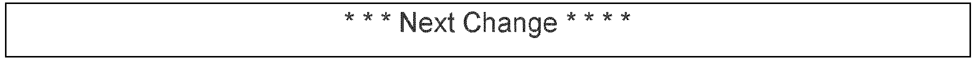

### 8.66 Fully Qualified Domain Name (FQDN)

Fully Qualified Domain Name (FQDN) is coded as depicted in Figure 8.66-1.

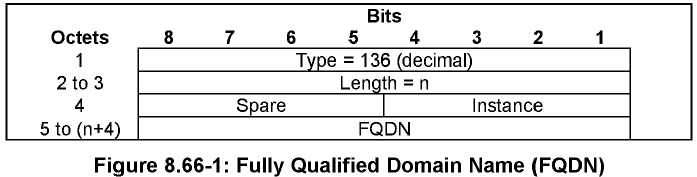

The FQDN field encoding shall be identical to the encoding of a FQDN within a DNS message of clause 3.1 of IETF RFC 1035 [31] but excluding the trailing zero byte.
NOTE 1: The FQDN field in the IE is not encoded as a dotted string as commonly used in DNS master zone files.

A "PGW node name" IE in S3/S10/S16/S5/S8/S2b GTP messages shall be a PGW host name as per clause 4.3.2 of 3GPP TS 29.303 [32] when the PGW FQDN IE is populated from 3GPP TS 29.303 [32] procedures. Specifically, the first DNS label is either "topon" or "topoff', and the canonical node name of the PGW starts at the third label. The same rules apply to "SGW node name" IE on S3/S10/S16 and "SGW-U node name" IE on S5.
NOTE 2: The constraint of clause 4.3.2 of 3GPP TS 29.303 format is on populating the IE by 3GPP nodes for 3GPP nodes, the receiver shall not reject an IE that is otherwise correctly formatted since the IE might be populated for a non-3GPP node.

An "MME node name" IE and an "SGSN node name" IE in S3 GTP messages indicate the associated ISR node when the ISR becomes active.

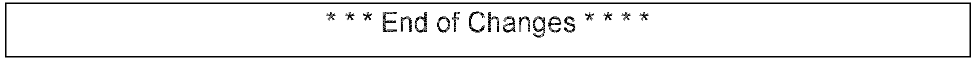

## Claims

1. A method performed by a second combined Session Management Function, SMF, / Packet Data Network Gateway-Control Plane ,PGW-C, node for interworking between a 4G Evolved Packet Network, EPC, and a 5G Core, the method comprising:
- receiving (3-12), at the second combined SMF/PGW-C node from a first combined SMF/PGW-C node, a request to create a session for a UE for a particular Access Point Name, APN, / Data Network Name, DNN, the request comprising information that enables or otherwise causes the second combined SMF/PGW-C node to send the response to an originating node of the request wherein the originating node is a Mobility Management Entity, MME, node from which the first combined SMF/PGW-C node received the request; and the method **characterised by**,
- sending (3-13), to the originating node, a response to the request, wherein the response comprises a fully qualified domain name, FQDN, of the second combined SMF/PGW-C node.

## Patentansprüche

1. Verfahren, das von einem zweiten kombinierten Sitzungsverwaltungsfunktions- (Session Management Function), SMF/Paketdatennetzwerk-Gateway-Steuerungsebenen- (Packet Data Network Gateway-Control Plane), PGW-C, Knoten für die Zusammenarbeit zwischen einem 4G Evolved-Paketnetzwerk (Evolved Packet Network), EPC, und einem 5G-Kern ausgeführt wird, wobei das Verfahren umfasst:
- Empfangen (3-12) am zweiten kombinierten SMF/PGW-C-Knoten von einem ersten kombinierten SMF/PGW-C-Knoten, einer Anfrage, um eine Sitzung für ein UE für einen bestimmten Zugangspunktnamen- (Access Point Name), APN/Datennetzwerknamen (Data Network Name), DNN, wobei die Anfrage Informationen umfasst, die den zweiten kombinierten SMF/PGW-C-Knoten aktivieren oder andernfalls veranlassen, die Antwort an einen Ursprungsknoten der Anfrage zu senden, wobei der Ursprungsknoten ein Mobilitätsverwaltungseinheits- (Mobility Management Entity), MME, Knoten ist, von dem der erste kombinierte SMF/PGW-C-Knoten die Anfrage empfangen hat; und das Verfahren **gekennzeichnet ist durch**
- Senden (3-13) einer Antwort auf die Anfrage an den Ursprungsknoten, wobei die Antwort einen vollständig qualifizierten Domänennamen (Fully Qualified Domain Name), FQDN, des zweiten kombinierten SMF/PGW-C-Knotens umfasst.

## Revendications

1. Procédé exécuté par un second noeud combiné à fonction de gestion de session, SMF/de plan de contrôle de passerelle de réseau de données par paquets, PGW-C, pour l'interfonctionnement entre un réseau de paquets évolué 4G, un EPC et un coeur 5G, le procédé comprenant :
- la réception (3-12), au niveau du second noeud combiné SMF/PGW-C en provenance d'un premier noeud combiné SMF/PGW-C, d'une demande de création d'une session pour un UE pour un nom de point d'accès, APN/nom de réseau de données, DNN, particulier la demande comprenant des informations qui activent ou amènent le second noeud combiné SMF/PGW-C à envoyer la réponse à un noeud d'origine de la demande, dans lequel le noeud d'origine est un noeud d'entité de gestion de mobilité, MME, à partir duquel le premier noeud combiné SMF/PGW-C a reçu la demande ; et le procédé est **caractérisé par**,
- l'envoi (3-13), au noeud d'origine, d'une réponse à la demande, dans lequel la réponse comprend un nom de domaine complet, FQDN, du second noeud combiné SMF/PGW-C.
